(19) Europäisches Patentamt
European Patent Office
Office européen des brevets

(11) EP 3 999 228 B1

(12) **EUROPEAN PATENT SPECIFICATION**

(45) Date of publication and mention of the grant of the patent:
**18.02.2026 Bulletin 2026/08**

(21) Application number: **20737048.7**

(22) Date of filing: **13.07.2020**

(51) International Patent Classification (IPC):
***B01J 20/26** (2006.01)* ***B01J 20/28** (2006.01)*
***B01J 20/30** (2006.01)* ***B01J 20/34** (2006.01)*
***C02F 1/28** (2023.01)*

(52) Cooperative Patent Classification (CPC):
**B01J 20/261; B01J 20/267; B01J 20/28011; B01J 20/28045; B01J 20/28085; B01J 20/3085; B01J 20/3425; B01J 20/3475; C02F 1/285;**
C02F 2101/103; C02F 2101/22

(86) International application number:
**PCT/EP2020/069695**

(87) International publication number:
**WO 2021/013596 (28.01.2021 Gazette 2021/04)**

(54) **N-ALKYL-D-GLUCAMINE BASED MACROPOROUS POLYMERIC CRYOGEL FOR SEQUESTERING AND/OR REMOVING TOXIC CONTAMINANTS**

N-ALKYL-D-GLUCAMIN-BASIERTES MAKROPORÖSES POLYMERES KRYOGEL ZUR SEQUESTRIERUNG UND/ODER ENTFERNUNG TOXISCHER VERUNREINIGUNGEN

CRYOGEL POLYMÈRE MACROPOREUX À BASE DE N-ALKYL-D-GLUCAMINE POUR SÉQUESTRER ET/OU ÉLIMINER DES CONTAMINANTS TOXIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2019 IT 201900012339**

(43) Date of publication of application:
**25.05.2022 Bulletin 2022/21**

(73) Proprietors:
- **Consiglio Nazionale Delle Ricerche**
  **00185 Roma (IT)**
- **Alma Mater Studiorum - Università di Bologna**
  **40126 Bologna (IT)**

(72) Inventors:
- **CARROCCIO, Sabrina Carola**
  **95126 CATANIA (CT) (IT)**
- **CUNSOLO, Francesca**
  **95126 CATANIA (CT) (IT)**
- **MECCA, Tommaso**
  **95126 CATANIA (CT) (IT)**
- **PRIVITERA, Vittorio**
  **95126 CATANIA (CT) (IT)**
- **USSIA, Martina**
  **95126 CATANIA (CT) (IT)**
- **CARETTI, Daniele**
  **40136 BOLOGNA (BO) (IT)**
- **SCURTI, Stefano**
  **40136 BOLOGNA (BO) (IT)**

(74) Representative: **Currado, Luisa**
**De Simone & Partners S.r.l.**
**Via Giulio Caccini, 1**
**00198 Roma (IT)**

(56) References cited:
**US-A- 3 567 369** **US-A1- 2011 117 596**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 999 228 B1

## Description

### Background of the invention

The present invention refers to the field of chemistry and in particular to a N-alkyl-D-glucamine based macroporous polymeric cryogel, the method for the preparation thereof and its use for sequestering and/or removing toxic contaminants such as metalloids and/or toxic heavy metals, for example from water and/or soil.

### Prior Art

Arsenic (As) is a highly toxic and fatal element for human health. Among the 21 countries in different parts of the world affected by groundwater arsenic contamination, the largest population at risk is in Bangladesh, followed by West Bengal in India. Gravity is such that in Bangladesh there is "the greatest mass poisoning of a population in history" (M. Argos, T. Kalra, P.J. Rathouz, Y.Chen, B. Pierce, F. Parvez, T. Islam, A. Ahmed, M. Rakibuz-Zaman, R. Hasan, G. Sarwar, , V. Slavkovich, A. van Geen, J. Graziano, H. Ahsan, Arsenic exposure from drinking water, and all-cause and chronic-disease mortalities in Bangladesh (HEALS): a prospective cohort study, Lancet , 2010, 376, 252-258).

According to the World Health Organization, the maximum recommended limit in drinking water is 0.01 ppm. This limit, in developing nations, is largely exceeded, putting at risk the health of more than 45 million people. In the last decade, for the removal of As, adsorption method represents one of the most promising tool (D. Mohana & C. U. Pittman Jr., Arsenic removal from water/wastewater using adsorbents-A critical review, J. Hazard. Mater., 2007, 142, 1-2, 1-53).

The advantages of adsorption, in addition to the absence of toxic sludge production, lie in its high removal efficiency and low cost. Adsorption can be carried out by different types of compounds such as activated carbon, clays, metal oxides, compounds based on ferrous ions, biomasses and polymer resins (R. Singh, S. Singh, P. Parihar, V. P. Singh, S. M. Prasad, Arsenic contamination, consequences and remediation techniques: A review, Ecotoxicology and Environmental Safety, 2015, 112 247-270).

The use of absorbent polymers allows to direct their formulation towards the selective capture of As III and V with all the benefits deriving from the use of polymeric materials and the advantage of an easy and economic regeneration. N-methyl-D-glucamine based resins have aroused great scientific interest due to their excellent results in terms of capture and selectivity towards As (V) (L. Dambies, R. Salinaro, & S. D. Alexandratos, Immobilized N-Methyl-D-glucamine as an Arsenate-Selective Resin, Environ. Sci. Technol. 2004, 38, 6139-6146).

The Chinese patent n. CN102266749 discloses a composite nano-adsorbent for removing arsenic from water and its preparation by firstly adding a ferrous salt and a manganate to an aqueous solution of a soluble organic polymer, and performing a redox reaction to obtain a nano-iron-manganese oxide copolymer precursor. Then the dispersed composite nano-adsorbent is obtained by adding a base to the nano-iron-manganese oxide copolymer precursor and aging it, wherein the organic polymer is wheat starch, corn starch, starch dextrin, sweet potato powder or polyethylene glycol. The so-obtained composite nano-adsorbent is dispersed in the water in a dosage adjusted according to the arsenic concentration of the raw water as well as the ratio of the trivalent /pentavalent arsenic. The adsorbent is kept in contact with the water solution for 5-10 min at a stirring speed of 5-50 rpm. Then, 0.5%-2% polyacrylamide (PAM) or 1%-5% chitosan and EDTA mixture can be added to the water as organic flocculants.

US Patent Application, Publication n. US 2013/0186836 discloses a method for the removal of arsenic by the use of a porous adsorbent which comprises a solid phase with chelating groups comprising metal ions.

Chinese patent n. CN105080519 discloses an adsorbent thin film retaining hexavalent chromium ions containing N-methyl-D-glucamine and its method of preparation wherein the N-methyl-D-glucamine functional resin is synthesized.

Japanese patent n. JPS58146448 discloses a resin adsorbing boron obtained by reacting phenols, aldehydes, and aminopolyalcohol with N-methyl-D-glucamine or N-ethyl-D-glucamine. This polycondensation reaction, in the presence of an alkaline catalyst, produces a chelating ion exchange resin having a three-dimensionally cross-linked structure.

Japanese patent n. JP2006167638 discloses a method for removing arsenic from hot spring water by a chelate polymer comprising N-methyl-D-glucamine and aminopolyol.

International patent application, publication n. WO2018180430 discloses a filter cartridge made of a plurality of filtration base fabrics wrapped around a hollow inner cylinder or laminated. Part of filter cartridge is constituted by a polyolefin fiber chemically bonded with N-methyl-D-glucamine, or other functional groups providing an high efficiency metal-adsorbing.

International patent application, publication n. WO2006110574 discloses a method for regenerating N-Methyl-D-glucamine-functional resin that has been used for removing boron.

US Patent Application, Publication n. US 2008/0169240 discloses the preparation of crosslinked polymeric beads for removing arsenate from water, as well as methods for preparing and using them, wherein the chelate-forming groups comprise protonated N-methyl-D-glucamine.

International patent application, publication n. WO 2017/137919 and US Patent Application, Publication n. 2019/0030494 in the name of the same applicant discloses crosslinked polymeric materials in the form of cryogel capable of sequestering heparin. The material is obtained by cryopolymerization, a technique comprising a freezing step of a solution, being aqueous or a mixture of polar organic solvents which ensure the solubility of selected monomers allowing the polymerization in the presence of a initiator and a crosslinking agent forming a 3D polymeric material.

It is known a polymer obtained through radical polymerization using ammonium persulfate as initiator for glycidyl methacrylate-N-methyl-D-glucamine monomer (GMA-NMG) able to remove arsenic in combination with ultrafiltration membranes (Leandro Toledo, Bernabé L. Rivas, Bruno F. Urbano, Julio Sánchez, Novel N-methyl-D-glucamine-based water-soluble polymer and its potential application in the removal of arsenic, Separation and Purification Technology, V., 2013, 1-7).

It is known a polypropylene based membrane functionalized by grafting glycidyl methacrylate and subsequently reacting these precursor membranes with N methyl-D-glucamine for the selective removal of arsenic (N. R. Shinde, V. Chavan, R. Acharya, N.S. Rajurkar, A.K. Pandey, Selective removal of arsenic(V) from natural water using N-methyl-D-glucamine functionalized poly(propylene) membranes, J. Env. Chem. Eng., 2,2014, 2221-2228).

It is known the formulation of nanocomposite ion-exchange resins based on N-methyl-D-glucamine groups where organic modified montmorillonite is used as a filler to improve the mechanical properties of the material tested to remove arsenate ions in water solution (B F. Urbano, B. L. Rivas , F. Martinez , S. D. Alexandratos, Water-insoluble polymer-clay nanocomposite ion exchange resin based on N-methyl-D-glucamine ligand groups for arsenic removal, React. Functi. Polym. 72, 2012, 642-649);

It is known a commercially available chelating resin namely, Amberlite IRA 743 (AMB) consisting in a macroporous polystyrene N-methylglucamine with free base used to remove chromium(VI) ions from water solution(M. R. Gandhi, N. Viswanathan, S. Meenakshia, Adsorption mechanism of hexavalent chromium removal using Amberlite IRA 743 resin, Ion Exch. Lett. 3, 2010, 25-35);

Is known a macroporous poly(2-hydroxyethyl methacrylate) -based monolithic cryogel functionalized with l-lysine (pHEMA-lys) obtained by polymerizing hydroxyetyhlmethacrylate (HEMA) with the crosslinker N-N'-methylenebisacrylamide (MBAA) in water (R. La Spina et al., "Chemically modified poly(2-hydroxyethyl methacrylate) cryogel for the adsorption of heparin", Journal of Biomedical Materials Research, Part B: Applied Biomaterials, vol. 102, no. 6, 2014, 1207-1216).

The same inventors presented at the XXIII National Congress of the Associazione Italiana di Scienza e Tecnologia delle Macromolecole - AIM, 9-12 September 2018, Catania, Italy the results of arsenate ion capture by materials containing N-methyl-D-glucamine monomers.

US patent n. 3567369 discloses resins for recovering boron wherein the resin is an insoluble chlorurate cross-linked copolymer of styrene-divinyl benzene and poly-hydroxy alkyl amine deriving from sorbitol and mannitol.

US patent application, pubblication n. US2011/0117596 discloses macroporous gels being polyacrylamide gel, optionally modified by iminodiacetic acid, used for absorbtion of Cu(II).

International patent application, publication n. WO03031014 discloses macroporous agar and agarose copolymer with a chaotropic agent used for separing cells, protein and viruses.

International patent application, publication n. WO03041830 discloses macroporous acrylamide containing copolymers used for the separation of cells and plasmids.

## Technical problem

In view of what already known in the art, the present inventors design a method for the preparation of a macroporous polymeric adsorbent material able to remove toxic contaminants from water and soil, having a three-dimensional macroporous structure significantly improving the performance in terms of adsorption efficiency and rate of complexation in respect to other known materials having similar composition but different three-dimensional structure.

The process of the invention is based on cryo-polymerization of a polymerizable monomer containing a residue of N-methyl-D-glucamine. The cryo-polymerization allows to obtain macroporous chelating polymers effective in removing toxic contaminants such as toxic metalloids as arsenic and boron and other poisoning heavy metals.

The distinguishing features of the process of the present invention is the use of cryo-polymerization on N-alkyl-D-glucamine derivative monomers.

Unexpectedly the same inventors found that the macroporous polymeric materials obtained by the process of the present invention show improved performance in sequestering and adsorbing contaminants in respect to known materials having similar composition but different three-dimensional structure.

The distinguishing feature of the macroporous polymeric material obtained by the process of the present invention is the presence of interconnected pores with size diameter ranging from 5 to 100 $\mu$m.

The same inventors performed a purposive selection of monomers, spacers and cross-linking agent and obtained a polymeric material with very high porosity and therefore with high performance in terms of adsorption and

rate of complexation.

Compared to polymeric systems with N-methyl-D-glucamine already known in the art, the object of the invention has an excellent surface area availability, which results in considerably higher sequestrating capacity, and higher adsorption rate towards toxic contaminants.

It is possible to modulate the efficiency of the material by mixing the N-alkyl-D-glucamine derivative monomers with a different monomer not containing N-alkyl-D-glucamine. The physical properties of the materials in object can be varied by changing the structure of monomers used, the crosslinker type and its molar ratio in respect to the sum of the moles of monomers used, the concentration of polymerizable species present in the solution, the solvent or solvent mixtures used to solubilize the monomers, the radical initiators and catalysts type and concentration used to induce the polymerization reaction, and finally the temperature used during the cryo-polymerization process.

The product obtained makes it easier to dispose of the residual toxic contaminant through the subsequent leaching of the system.

## Object of the invention

The present invention concerns a macroporous polymeric adsorbent material having a three-dimensional structure with interconnected pores of diameter comprised between 5 and 100 μm measured by using Scanning Electron Microscopy analysis, being in the form of a cryogel, wherein the cryogel is of formula (I):

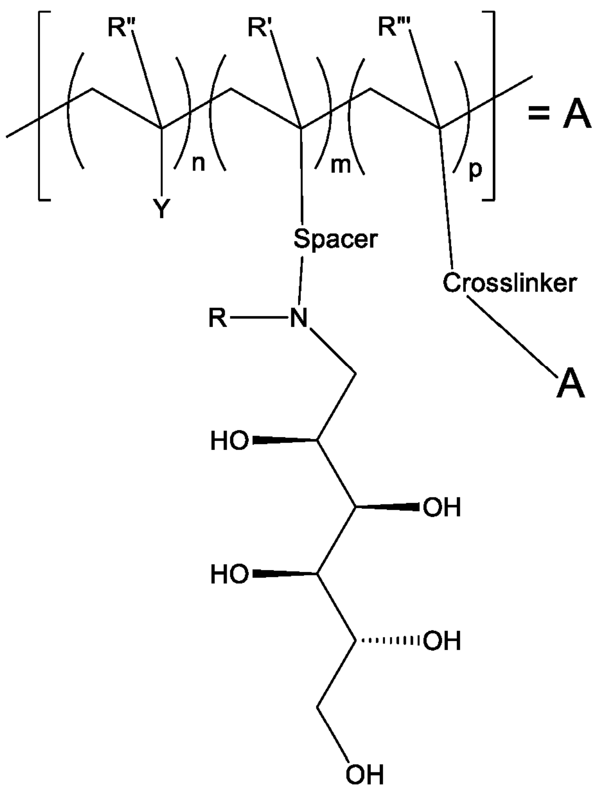

Wherein n is a percentage comprised between 0 and 99;

m is a percentage comprised between 1 and 100;

n + m is 100;

p is a value ranging from 0% to 40% of (n+m);

Y is selected from the group consisting of: COOH, $CONH_2$, $COOCH_2CH_2OH$, $COOCH_2CH_2NH_2$, $COOCH_2CH_2N(CH_3)_2$, $SO_3H$, $PhSO_3H$, PhCOOH;

R is selected from the group consisting of $CH_3$, $CH_2CH_3$, $CH_2CH_2CH_3$, $CH(CH_3)_2$;

R', R'', R''', the same or different are H or $CH_3$;

spacer is selected from the group consisting of

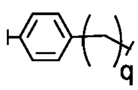 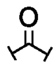 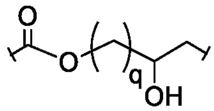 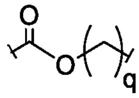 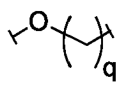 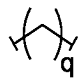

q is an integer comprised between 1 and 10;

A is the main polymeric chain which is repeated as indicated in the general formula (I);

crosslinker is a compound with two polymerizable double bond.

A further object of the present invention is the use of the above polymeric adsorbent material for sequestering toxic contaminants.

A further object of the present invention is the use of the above polymeric adsorbent material for the removal of toxic metalloids and/or toxic heavy metals from contaminated water and/ or soil.

A further object of the present invention is the process for the preparation of the above polymeric adsorbent material.

The invention is set out in the appended set of claims.

Further features of the present invention will be clear from the following detailed description with reference to the experimental results provided and the attached figures.

## Brief description of the drawings

Figure 1 shows Scanning Electron Microscopy (SEM) images of cryogel with (A) Polystyrene-N-methyl-D-glucamine (0% 2-hydroxyethylmethacrylate, HEMA), copolymers with (B) 25% HEMA, (C) 50% HEMA e (D) 75% HEMA.

Figure 2 shows in graph Thermal Gravimetric Analysis and its derivative (TGA and DTGA) profiles of Polystyrene-N-methyl-D-glucamine and copolymer with 50% HEMA (continuous and dashed line respectively).

Figure 3 shows $^1$H-NMR spectra of styrene-N-methyl-D-glucamine monomer in DMSO.

Figure 4 shows HMBC spectra of the styrene-N-methyl-D-glucamine monomer in DMSO.

Figure 5 shows Fourier Transform Infrared Spectroscopy (FTIR) spectra measured on Polystyrene-N-methyl-D-glucamine cryogel.

Figure 6 shows in graph the efficiency in arsenic sequestration as a function of immersion time.

## Detailed description of the invention

<u>Definition</u>

Within the meaning of the present invention, macroporous means a material containing pores with diameters bigger than 50 nm, according to IUPAC recommendations.

Within the meaning of the present invention, adsorbent material means a material able to remove, by chemical or physical phenomena occurring at the interface, some chemical species from a solution, in particular case from a water solution.

Within the meaning of the present invention, cryo-polymerization means the process of obtaining macroporous polymers by performing a polymerization at temperature below the freezing point of the solvent used to solubilize the monomers.

Within the meaning of the present invention cryogel means a polymeric matrix obtained by cryo-polymerization.

Within the meaning of the present invention HEMA means monomer of 2-hydroxyethyl methacrylate.

Within the meaning of the present invention polystyrene-N-methyl-D-glucamine means a polymer obtained from the polymerization of 4-vinyl-benzyl-N-methyl-D-glucamine monomer and a crosslinking agent.

Within the meaning of the present invention toxic contaminant means toxic metalloids and/or toxic heavy metals.

Within the meaning of the present invention a metalloid is a chemical element having properties in between those of metals and non-metals.

Within the meaning of the present invention toxic metalloids are arsenic, boron, antimony.

Within the meaning of the present invention heavy metal is a metal with high density, high atomic weight or high atomic numbers.

Within the meaning of the present invention toxic heavy metals are selected from the group consisting of cadmium, mercury, lead, manganese, chromium, cobalt, nickel, copper, zinc, silver, thallium. More preferably, chromium.

Object of the invention is a macroporous polymeric adsorbent material having a three-dimensional structure with interconnected pores of diameter comprised between 5 and 100 μm measured by using Scanning Electron Microscopy analysis, being in the form of a cryogel, wherein the cryogel is of formula (I):

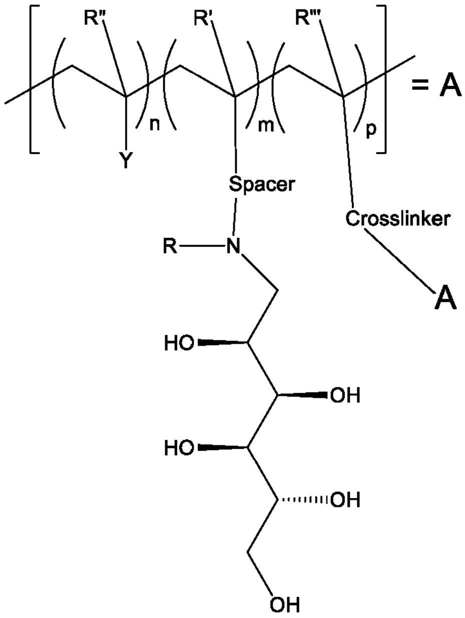

Wherein n is a percentage comprised between 0 and 99;

m is a percentage comprised between 1 and 100;

n + m is 100;

p is a value ranging from 0% to 40% of (n+m);

Y is selected from the group consisting of: COOH, $CONH_2$, $COOCH_2CH_2OH$, $COOCH_2CH_2NH_2$, $COOCH_2CH_2N(CH_3)_2$, $SO_3H$, $PhSO_3H$, PhCOOH;

R is selected from the group consisting of $CH_3$,$CH_2CH_3$, $CH_2CH_2CH_3$, $CH(CH_3)_2$;

R', R'', R''', the same or different are H or $CH_3$;

spacer is selected from the group consisting of

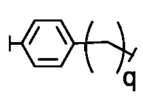 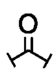 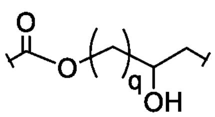 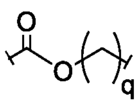 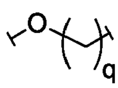 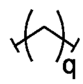

q is an integer comprised between 1 and 10;

A is the main polymeric chain which is repeated as indicated in the general formula (I);

crosslinker is a compound with two polymerizable double bond.

Preferably the macroporous polymeric adsorbent material has a porosity comprised between 50% and 95%, more preferably the porosity is comprised between 80% and 90%.

Preferably in the macroporous polymeric adsorbent material having a three-dimensional structure the interconnected pores have a diameter of 20-30 μm or 5-10 μm measured by using Scanning Electron Microscopy analysis.

In a preferred embodiment in the macroporous polymeric adsorbent material having a three-dimensional structure when the interconnected pores have a diameter comprised between 5 and 100 μm measured by using Scanning Electron Microscopy analysis the porosity is comprised between 50% and 95%.

In a preferred embodiment in the macroporous polymeric adsorbent material having a three-dimensional structure when the interconnected pores have a diameter of 20-30 μm or 5-10 μm measured by using Scanning Electron Microscopy analysis the porosity is comprised between 80% and 90%.

The diameter of the interconnected pores is measured by using Scanning Electron Microscopy (SEM) analysis.

Preferably n is 0%, 25%, 50%, 75%.

Preferably m is 100%, 75%, 50%, 25%.

Preferably p is 10%, 16.7%, 20%.

Preferably Y is $COOCH_2CH_2OH$, $COOCH_2CH_2NH_2$.

Preferably R is $CH_3$ .

Preferably R', R'', R''', the same or different are H or $CH_3$.

Preferably the spacer is:

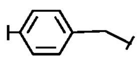 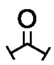 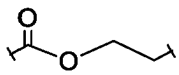

Preferably q is 1, 2.

The crosslinker is selected from the group consisting of: Divinylsulphone, N,N'-Methylenebisacrylamide, N,N'-Methylenebismetaacrylamide, N,N'-hexamethylenebisacrylamide, N,N'-diallylbisacrylamide, diallyl fumarate, diallyl phthalate, ethyleneglycoldiacrylate, poly(ethyleneglycol)diacrylate, propyleneglycoldiacrylate, poly(propyleneglycol)diacrylate.

More preferably the crosslinker is N,N'-Methylenebisacrylamide.

In a preferred embodiment the macroporous polymeric adsorbent material has a three-dimensional structure with interconnected pores of diameter comprised between 20 and 30 μm measured by using Scanning Electron Microscopy analysis, a porosity comprised between 80% and 85% and the cryogel is of polystyrene-N-methyl-D-glucamine.

In a preferred embodiment the macroporous polymeric adsorbent material has a three-dimensional structure with interconnected pores of diameter comprised between 10 and 15 μm measured by using Scanning Electron Microscopy analysis, a porosity comprised between 82% and 87% and the cryogel is of polystyrene-N-methyl-D-glucamine and 2-hydroxyethylmethacrylate copolymer 1:1.

The thermal degradation temperature is determined by thermogravimetric analysis using a thermogravimetric apparatus under a nitrogen atmosphere starting at 20°C, heating rate 10 °C/min$^{-1}$ until 600°C.

Preferably, when the cryogel consists of polystyrene-N-methyl-D-glucamine derivative polymer, the temperature at maximum rate of decomposition of glucamine part is around 308°C and the temperature at maximum rate of decomposition of polystyrene matrix is around 443°C.

Preferably, when the cryogel consists of styrene-N-methyl-D-glucamine derivative/2-hydroxyethylmethacrylate copolymer, the temperature at maximum rate of decomposition of glucamine is around 298°C and the temperature at maximum rate of decomposition of polymeric matrix is around 426°C.

A further object of the present invention is the process for the preparation of macroporous polymeric adsorbent material having a three-dimensional structure with interconnected pores of diameter comprised between 5 and 100 μm measured by using Scanning Electron Microscopy analysis, being in the form of a cryogel, wherein the cryogel is of formula (I):

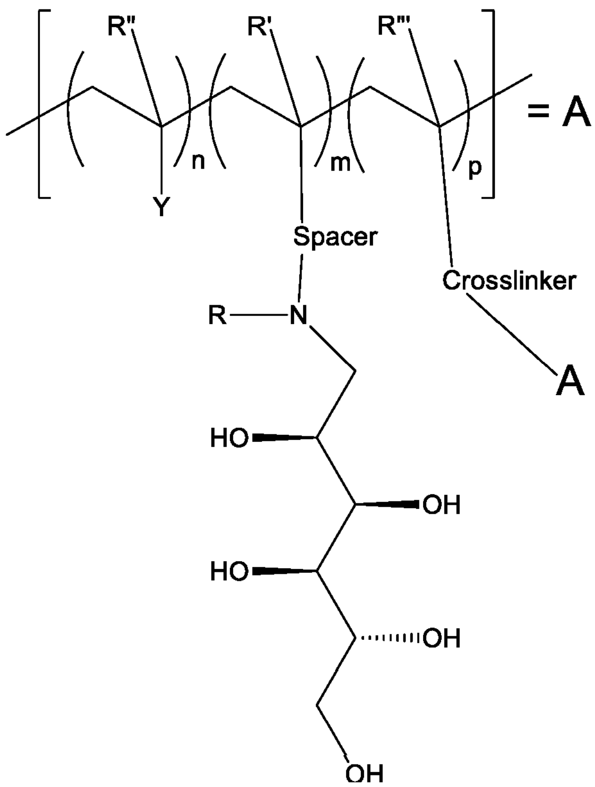

Wherein n is a percentage comprised between 0 and 99;

m is a percentage comprised between 1 and 100;
n + m is 100;
p is a value ranging from 0% to 40% of (n+m);
Y is selected from the group consisting of: COOH, $CONH_2$, $COOCH_2CH_2OH$, $COOCH_2CH_2NH_2$, $COOCH_2CH_2N(CH_3)_2$, $SO_3H$, $PhSO_3H$, PhCOOH; R is selected from the group consisting of $CH_3$, $CH_2CH_3$, $CH_2CH_2CH_3$, $CH(CH_3)_2$;
R', R'', R''', the same or different are H or $CH_3$;
spacer is selected from the group consisting of

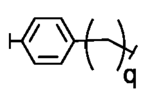 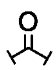 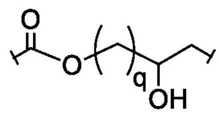 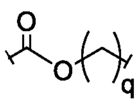 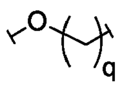 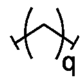

q is an integer comprised between 1 and 10;
A is the main polymeric chain which is repeated as indicated in the general formula (I);
the crosslinker is a compound with two polymerizable double bonds selected from the group consisting of: Divinylsulphone, N, N' -Methylenebisacrylamide, N,N'- Methylenebismetaacrylamide, N, N' -hexamethylenebisacrylamide, N, N' -diallylbisacrylamide, diallyl fumarate, diallyl phthalate, ethyleneglycoldiacrylate, poly (ethyleneglycol) diacrylate, propyleneglycoldiacrylate, poly (propyleneglycol) diacrylate.

Comprising the following steps:

a) Mixing at least one polymerizable monomer containing N-alkyl-D-glucamine selected from the group consisting of:

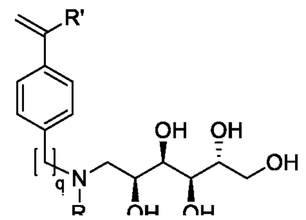
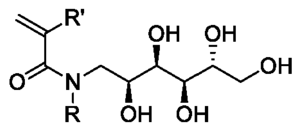

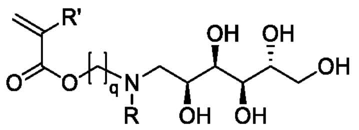
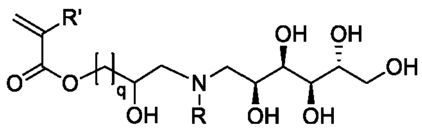

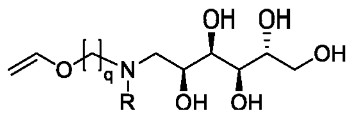
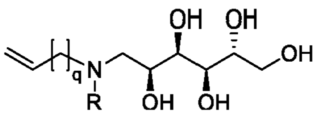

wherein R is selected from the group consisting of $CH_3$, $CH_2CH_3$, $CH_2CH_2CH_3$, $CH(CH_3)_2$;
R' is H, $CH_3$
q is an integer comprised between 1 and 10;
and optionally a polymerizable monomer not containing N-alkyl-D-glucamine selected from the group consisting of:

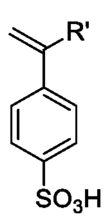
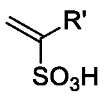
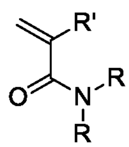
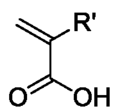
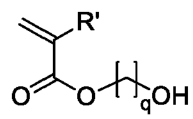
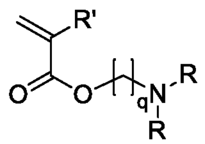

wherein R is selected from the group consisting of $CH_3$, $CH_2CH_3$, $CH_2CH_2CH_3$, $CH(CH_3)_2$;
R' is H, $CH_3$
q is an integer comprised between 1 and 10;
with a crosslinking agent characterised in having two polymerizable double bonds in the presence of a solvent or mixture of solvents being in the solid state at the temperatures used in the cryo-polymerization process.

b) Adding at a temperature comprised between 0 and 5°C, under stirring, to the solution as obtained in step a) an initiator of radical polymerization and a catalyst for the production of radicals.
c) Cooling of the solution as obtained in b) at a temperature comprised between -10 and -25 °C for a time comprised between 12 and 48 hours until the cryogel is obtained;
d) Thawing, washing and drying the cryogel as obtained in step c).

Preferably in step a) the percent molar ratio between polymerizable monomer containing N-alkyl-D-glucamine and the polymerizable monomer not containing N-alkyl-D-glucamine is comprised between 1% to 100%, more preferably is 25%, 50%, 75%, 100%.

Preferably in step a) the solvent is selected from the group consisting of: water, dimethylsulphoxide, dioxane, N,N-dimethylacetamide, *tert*-butanol, cyclohexane, and mixtures thereof, more preferably is water.

According to the invention the crosslinking agent is selected from the group consisting of: Divinylsulphone, N,N'-Methylenebisacrylamide, N,N'-Methylenebismetaacrylamide, N,N'-hexamethylenebisacrylamide, N,N'-diallylbisacrylamide, diallyl fumarate, diallyl phthalate, ethyleneglycoldiacrylate, poly(ethyleneglycol)diacrylate, propyleneglycoldiacrylate, poly(propyleneglycol)diacrylate.

Preferably in step a) the crosslinking agent is added in a molar ratio comprised 0 and 1/2.5 in respect to the molar amount of starting monomers, preferably 1/6.

Preferably in step a) the concentration of all polymerizable species is comprised between 10% and 50% in weight in respect to the volume of used solvent.

More preferably in step a) The concentration of all polymerizable species is comprised between 10% and 30% in weight in respect to the volume of used solvent.

According to the invention in step a) pH is maintained neutral, in the range between 6 - 8.

The pH can be adjusted by adding diluted acids or bases, such as HCl and NaOH.

In step b) the initiator of radical polymerization is a compound capable of forming radicals; according to the invention is selected from the group consisting of organic and inorganic peroxides, peracids, azo-compounds, redox or UV initiators. Preferably in step b) the initiator of radical polymerization is used with a concentration between 0.5% and 10% by weight, based on the sum of monomers by weight.

Preferably in step b) the catalyst for the production of radicals is tetramethylethylenediamine.

Preferably the washing step is carried out by washing sequentially with water, followed by diluted HCl and finally with mixtures of $H_2O$/HCl/EtOH wherein the concentration of EtOH progressively increase up to pure EtOH.

Preferably the drying step is carried out under nitrogen flow and then under vacuum.

A further object of the present invention is the use of the macroporous polymeric adsorbent material having a three-dimensional structure with interconnected pores of diameter comprised between 5 and 100 μm, being in the form of a cryogel, wherein the cryogel is of formula (I) for sequestering and/or removing toxic contaminants.

Preferably for sequestering and/or removing toxic contaminants from contaminated water.

Preferably for sequestering and/or removing toxic contaminants from contaminated soil.

Toxic contaminants are toxic metalloids and/or toxic heavy metals.

According to the invention toxic metalloids are selected from the group consisting of arsenic, boron, antimony. More preferably boron, arsenic.

According to the invention toxic heavy metals are selected from the group consisting of cadmium, mercury, lead, manganese, chromium, cobalt, nickel, copper, zinc, silver, thallium. More preferably chromium.

A further object of the present invention is the use of the macroporous polymeric adsorbent material having a three-dimensional structure with interconnected pores of diameter comprised between 5 and 100 μm measured by using Scanning Electron Microscopy analysis, being in the form of a cryogel, wherein the cryogel is of formula (I) for the manufacture of devices for sequestering toxic contaminants.

The devices can be used in any process known in the art for sequestering toxic contaminants, preferably from water.

Preferably the devices for sequestering toxic contaminants can be in the form of filters or sponges.

Are therefore object of the present invention the filters or sponges comprising the macroporous polymeric adsorbent material having a three-dimensional structure with interconnected pores of diameter comprised between 5 and 100 μm being in the form of a cryogel, wherein the cryogel is of formula (I).

The filters can be included in filtration system for domestic or industrial environments, can be included in water filtering cartridges for carafes, can be included in systems for remediation of sewage and wastewater.

Sponges can be used in soil remediation.

After remediation, the contaminants are retained by the sponge when it is squeezed while the liquid matrix is released clean.

**Examples**

Example 1: synthesis of 4-vinyl-benzyl-N-methyl-D-glucamine

The starting monomer was synthesized by suspending N-methyl-D-glucamine (1 g, 5 mmol) in 30 ml of $CH_3OH$ and adding to the suspension an equimolar amount of 4-vinyl-benzylchloride (0.70 mL, 5 mmol) in presence of $Na_2CO_3$, according to the following reaction scheme.

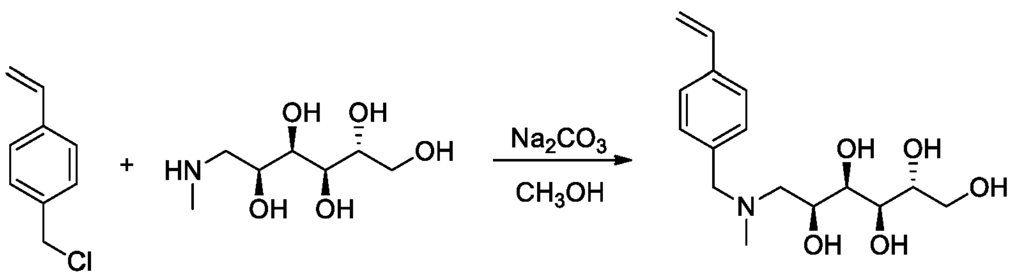


The reaction mixture was stirred at room temperature and the reaction progress monitored by Thin Layer Chromatography (TLC). At the end of the reaction, the mixture was filtered and the methanol evaporated. The product was

purified by crystallization in chloroform and characterized by Nuclear Magnetic Resonance (NMR).
Product: 4-vinyl-benzyl-N-methyl-D-glucamine MW = 311.38 g/mol

$^1$H-NMR (400 MHz, in DMSO) [ppm referred to TMS] 2.10 (s, 3H, N-$CH_3$); 2.4-2,6 (m 2H, N-$CH_2$-CH); 3.31 - 3.84 (m, 8H, CH + $CH_2$); 5.22 (dd, 1H, CH=$CH_2$ cis); 5.85(dd, 1H, CH=$CH_2$ trans); 6.71 (dd, 1H, CH=$CH_2$); 7.35 (m, 4H, CH aromatic).

Example 2: synthesis of methacrylamido derivative of N-methyl-D-glucamine

The monomer was synthesized by dissolving N-methyl-D-glucamine (1 g, 5 mmol) in 25 ml of $CH_3OH$ and 5 ml of water. At the solution kept at 0°C, methacryloyl chloride (0.48 ml, 5 mmol) was slowly added keeping the pH around 8-9 by adding few drops of 2M KOH aqueous solution according to the following reaction scheme.

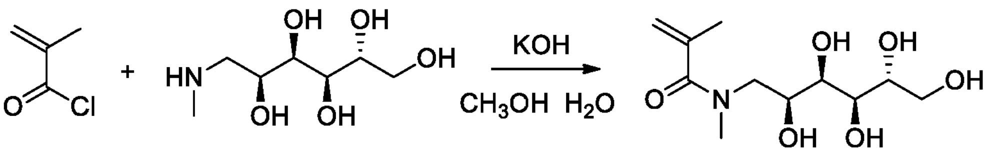


After 1h the mixture was filtered and the solvent evaporated. The obtained product was purified by crystallization in chloroform and characterized by NMR,

Example 3: synthesis of methacrylate of N-hydroxyethyl-N-methyl-D-glucamine

The first step of this synthesis is the preparation of 2-chloroethyl-methacrylate. Methacryloyl chloride (14 g, 134 mmol) was dissolved in 70 ml of THF and the solution was cooled to 0°C. A mixture of equimolar amount of 2-chloroethanol (10 g, 124 mmol) and triethylamine (21 ml) was slowly added keeping the temperature at 0°C. After stirring for 1h, the solution was filtered, and diluted with ethyl ether and washed with water. The solution was dried with anhydrous $Na_2SO_4$. filtered and evaporated under vacuum. The obtained 2-chloroethylmethacrylate was distilled under vacuum and characterized.

N-methyl-D-glucamine (1 g, 5 mmol) was suspended in 30 ml of methanol and an equimolar amount of 2-chloroethyl-methacrylate (0.74 ml, 5 mmol) was added. Anhydrous $Na_2CO_3$ was added and the mixture was stirred for 7 hours at room temperature. After filtration and solvent evaporation the product was crystallized in chloroform and characterized by NMR.

The reaction is showed in the following reaction scheme.

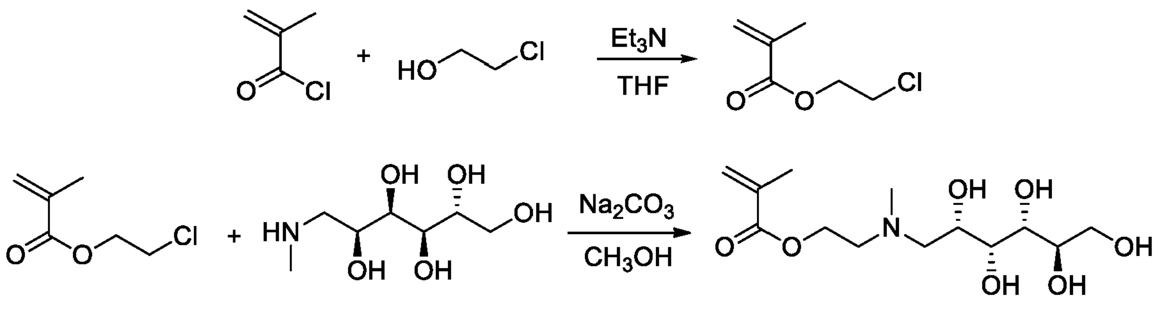


Example 4: Cryo-polymerization

In a 1.5 mL vial containing 180 μL of $H_2O$, 40 mg of 4-vinyl-benzyl-N-methyl-D-glucamine and 3.3 mg of N,N'-methylenebisacrylamide (MBAA, molar ratio 1/6 comparing to the moles of monomer) were added. Syntheses of copolymeric materials with HEMA as co-monomer were performed using following molar ratio: 25/75, 50/50, 75/25. To the reaction mixture, HCl 2N was added at small doses, controlling the pH until reaching neutrality (about 50 μL) and stirring until complete dissolution. Additional 24 μL of $H_2O$ were added, then the solution was cooled to 0 °C and 3 μL of a 10% w/v ammonium persulphate (APS) solution and 3 μL of a 10% w/v tetramethylethylenediamine (TEMED) solution were added respectively under vigorous stirring. The reaction mixture was stirred for about 1 min and then transferred to a micro-reactor with a diameter of about 5.5 mm pre-cooled to 0 °C. The reactor was placed in a cryostat at -14 °C for about 24 hours, then, after thawing, the cryogel obtained was washed with $H_2O$ then with HCl 0.5 M and finally with mixtures of $H_2O$/HCl/EtOH progressively increasing the concentration of EtOH up to pure EtOH. The purified cryogel was dried under

nitrogen flow and then under vacuum. The final product consists of macroporous monolithic cryogel that is ready for the capture of arsenic, boron and toxic heavy metals ions from water.

The following formulas show examples of the structure of the cryogel obtained.

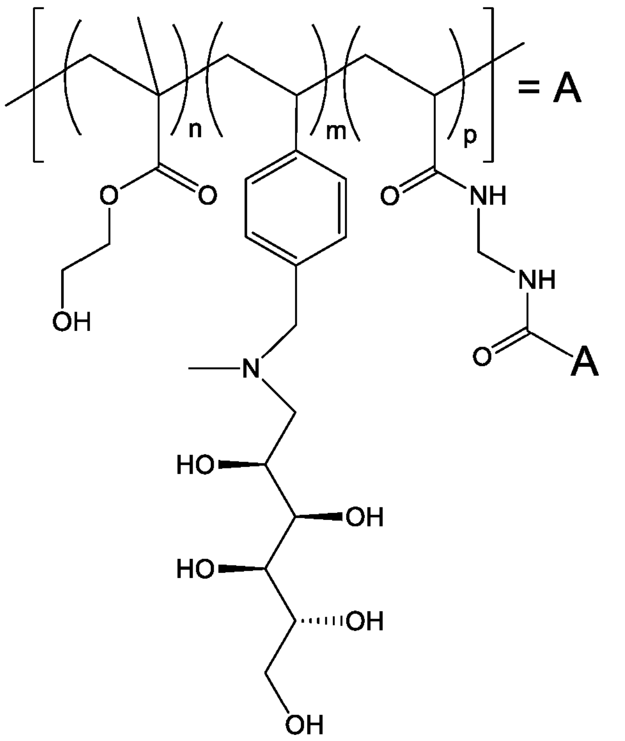

n = 0, 25, 50, 75
m = 100, 75, 50, 25
n + m = 100
p = 16.7%(n + m)

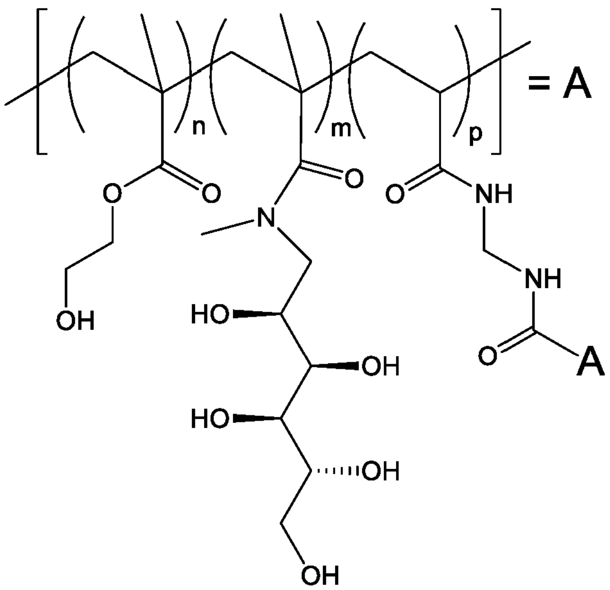

**n = 0, 25, 50, 75**
**m = 100, 75, 50, 25**
**n + m = 100**
**p = 16.7%(n + m)**

Example 5: SEM analysis

Scanning Electron Microscopy (SEM) analysis was performed by using a Zeiss Supra 25 field emission microscope. All samples were previously coated with a thin layer of gold (<10 nm) in order to make them conductive. Figure 1 shows the micrographs of the all synthesized cryogels. In particular, all samples reveal a typical macroporous structure. Furthermore, it is possible to observe from Figure 1 (A) and (B) that when HEMA is absent or its concentration is low, the pore distribution appears more uniform and regular ranging from 20 to 30 $\mu$m. Vice versa, cryogel with a higher content in HEMA [Figures 1 (C) and (D)] show a more jagged porous structure with smaller pore sizes. In the insets of Figures 1 (A)-(D), high-magnification images of the surfaces of cryogels are reported. From the inspection of the images, it is possible to appreciate the more uniform distribution and shape of the pores on their surface by decreasing the HEMA content.

Example 6: Thermogravimetric analyses

Thermogravimetric analyses (TGA) of the cryogel were performed by using a thermogravimetric apparatus (TA Instruments Q500) under a nitrogen atmosphere starting at 20°C, 10 °C/min$^{-1}$ heating rate until to 600°C. The Figure 2 shows the TGA results deriving from Polystyrene-N-Methyl-D-glucamine derivate and the related copolymer containing the 50% HEMA. It is possible appreciate that both samples undergo to two separate thermal degradation steps beginning from 280°C up to 500°C. The first thermal degradation steps belonging to polystyrene-N-Methyl-D-glucamine and co-poly(styrene-N-methyl-D-glucamine - HEMA) samples can be assigned to the decomposition of glucamine part (308 and 298 °C respectively) of the polymers. At higher temperature, the thermal degradation of polystyrene-N-Methyl-D-glucamine and co-poly(styrene-N-Methyl-D-glucamine - HEMA) takes place with a temperature at maximum rate of decomposition of 443 and 426 °C respectively.

Example 7: NMR characterization

$^1$H-NMR Proton nuclear magnetic resonance and HMBC (Heteronuclear Multiple Bond Correlation) spectra (figures 3 and 4), were recorded in order to characterize the purified styrene-N-methyl-D-glucamine monomer synthetized by reaction of 4-vinylbenzyl-cloride and N-metyl-D-glucamine. By the combination of the mono-and bi-dimensional analysis it is possible to confirm the presence of a para-substituted aromatic ring linked to the glucamine molecule. Furthermore, in the $^1$H-NMR spectrum, in the region between 5.0 and 7.0 ppm and 2.5 - 3.8 ppm are observable the diagnostic peaks of the C=C bond and the typical overlapped aliphatic hydrogen signals respectively.

Example 8: FTIR analysis

FTIR (Fourier Transform Infrared Spectroscopy) analysis was performed for the polystyrene-N-methyl-D-glucamine cryogel sample (Figure 5). The diagnostic bands at 3400-3100, 3000-2780, 1650, 1082 and 1024 cm$^{-1}$, corresponding to the O-H, C-H, C=O, and C-O group stretching vibrations and O-H bending modes respectively are evident. While, in the regions at 1600-1475 cm$^{-1}$ and 1450-1390 cm$^{-1}$ are shown the typical C=C aromatic stretching and the tertiary and secondary C-N stretching modes.

Example 9: Sequestration of arsenic

The efficiency of synthesized cryogels for the sequestration of arsenic from water was evaluated using two different concentrations of $Na_2HAsO_4 \cdot 7H_2O$. Particularly, high concentrations of arsenate ions equal to 1400 ppm and 140 ppm were used in order to identify the maximum adsorption capacity of the materials. The adsorption tests of the most efficient material (material 1) were carried out using approximately 10 mg of sample for 5 mL of solution measuring the residual concentration of arsenic as a function of time, by ICP-MS. The results are shown in figure 6.

Analysing the test with the highest concentration of arsenic, it is possible to extrapolate a saturation value greater than 70 mg/g. The test carried out at a concentration of arsenate equal to 140 ppm shows that 10 mg of material are able to eliminate 99.8% of the arsenic present in the solution. Finally, to evaluate the use of these materials in real conditions, a test at concentration equal to 45 ppb, that is a value 4.5 times higher than the limit of 10 ppb established by the WHO was performed. The material deriving from 100% styrene-N-methyl-D-glucamine monomer (material 1) and the compound made of an equimolar mixture of styrene-N-methyl-D-glucamine and hydroxyethyl-methacrylate (material 2) were both able to reduce arsenic concentration below the limits of potability. Precisely, residual arsenic content of 2 ppb for material 1 and 4 ppb for material 2, as shown in the following table 1, reporting residual values of As(V) ions after water treatment with cryogel 1 and 2, measured by ICP-MS technique.

**Table 1**

| Sample | INITIAL CONC. μg/L As | FINAL CONC. μg/L As |
|---|---|---|
| **Material 1** | 45.0 | 1.9 ± 0.5 |
| **Material 2** | 45.0 | 4.0 ± 0.5 |

Example 10: Sequestration of chromium

The efficiency of synthesized cryogels for the sequestration of chromium from water was evaluated preparing a solution of $K_2Cr_2O_7$ with an initial concentration in Cr ions of 45 ppb. The material deriving from 100% styrene-N-methyl-D-glucamine monomer (material 1) and the compound made of an equimolar mixture of styrene-N-methyl-D-glucamine and hydroxyethyl-methacrylate (material 2) were both able to reduce chromium concentration below the limits of potability. Precisely, residual chromium content of 0.7 ppb for material 1 and 2.9 ppb for material 2, as shown in the following table 2, reporting residual values of Cr(VI) ions after water treatment with cryogel 1 and 2, measured by ICP-MS technique.

Table 2

| Sample | INITIAL CONC. μg/L Cr | FINAL CONC. μg/L Cr |
|---|---|---|
| **Material 1** | 45.0 | 0.7 ± 0.5 |
| **Material 2** | 45.0 | 2.9 ± 0.5 |

Example 11: Equilibrium retention capacity

Batch equilibrium tests were carried out to calculate the equilibrium retention capacity ($Q_e$) values as well as the metal ions removal percentage. In general, ~10 mg of Material 1 were immersed into either bichromate ($K_2Cr_2O_7$) or arsenate ($Na_2HAsO_4 \cdot 7H_2O$) solutions (5 mL and pH=6) at different initial concentration, ranging from 30 to 1400 mg/L (of arsenate or chromium salt). The vials were maintained under constant shaking at 25°C and 180 rpm for 24h, withdrawing aliquots of 100 μL at different intervals of time to perform kinetic studies. The residual metal ion concentrations were evaluated by ICP-MS measurements. All experiments were repeated three times reporting a maximum Relative Standard Variation of 5% for As(V) and Cr(VI).

The following table 3 shows the initial concentration of metal ions ($C_0$), at the equilibrium ($C_e$), the equilibrium removal capacity ($Q_e$) calculated from the pseudo-second order model fitting, and percentage of metal ions removal after 24 h of contact time at room temperature wherein retention is calculated by the formula

$$\frac{C_0 - C_e}{C_0} \times 100$$

From the data of table 3 it is clear that all batch experiments showed highly efficient removal of both As(V) and Cr(VI) for all concentration studied, excepted for the highest ones, due to the reaching of cryo-sponge saturation limit.

Table 3

| As(V) | | | | Cr(VI) | | | |
|---|---|---|---|---|---|---|---|
| $C_0$ (mg $L^{-1}$) | $C_e$ (mg $L^{-1}$) | $Q_e$ (mg $g^{-1}$) | Retention % | $C_0$ (mg $L^{-1}$) | $C_e$ (mg $L^{-1}$) | $Q_e$ (mg $g^{-1}$) | Retention % |
| 7.7 | 0.3 | 4.2 | 97.6 | 7.9 | 0.1 | 10.2 | 98.5 |
| 17.4 | 0.5 | 7.7 | 97.3 | 18.1 | 0.2 | 18.3 | 98.9 |
| 72.6 | 1.5 | 36.5 | 97.9 | 68.3 | 1.3 | 59.9 | 98.1 |
| 168.4 | 18.6 | 69.4 | 88.9 | 165.1 | 10.7 | 122.5 | 93.5 |
| 338.8 | 182.5 | 73.7 | 46.2 | 308.1 | 190.2 | 125.4 | 37.1 |

$Q_e$ values for both metal ions were used to calculate the maximum adsorption capacities ($Q_m$) based on Langmuir model. From data fitting, ($Q_m$) values for As(V) and Cr(VI) were respectively 76.3 and 130.8 (mg $g^{-1}$). As showed in the following Table 4, data obtained from the material 1 were significantly higher than other reported in the prior art where similar material were used to remove As(V) or Cr(VI) ions.

Table 4

| Year | NMG-based materials | As(V) $Q_m$ (mg $g^{-1}$) | Cr(VI) $Q_m$ (mg $g^{-1}$) | Time of contact | Prior art |
|---|---|---|---|---|---|
| 2020 | VbNMG-100 | 76.3 | 130.8 | 24h | Material 1 |
| 2014 | Grafted NMDG membrane | 67.1 | / | / | [N.R Shinde] |
| 2012 | PVbNMDG nanocomposite | 55.2 | / | 48h | [B.F Urbano] |
| 2004 | NMDG | 60.5 | / | 3d. | [L. Dambies] |
| 2004 | IRA 743 | 14.7 | / | 3d. | [L. Dambies] |
| 2010 | IRA-743 | / | 29.3 | 1h | [M.R Gandhi] |

Example 12: Interfering Tests

For the interfering tests, in order to obtain the final concentrations of 0, 15, 30, 60, 120, 240 and 480 mg/L of sulphate or phosphate salt and 30 mg/L of arsenate or chromium salt, seven different vials containing 500 μL of arsenate salt (60 mg/L) or chromium salt (60 mg/L) solution were mixed with 500 μL of sulphate or phosphate at increasing concentrations (0, 30, 60, 120, 240, 480 and 960 mg/L). In each vial, a weighted sample of material 1 was added and shaken up to 24 h at 25°C and 180 rpm. After that, ICP-MS of As(V), Cr(VI) and P(V) residues was carried out, whereas the contribution of sulphate ions to As(V) or Cr(VI) was extrapolated by difference. After 24h of material 1/solution contact time, ICP-MS measurements evidenced that the presence of phosphate did not affect the As (V) and Cr(VI) sorption process of the material 1 for all oxyanion concentration tested, maintaining high sorption retention (~99%). Conversely, both As(V) and Cr(VI) retention were influenced by the presence of sulphate ions. In particular, by adding concentration of sulphate of 60 mg/L, the material 1 reduces its efficiency to 80% for both ions.

Example 13: Reusability

To study the reusability of the cryogel, material 1 was subjected to six consecutive adsorption/desorption cycles. Specifically, 30 mg/L of arsenate solution was added drop by drop to ~134 mg of sponge to reach the maximum swollen degree. After 5 minutes of contact time, the sponge was squeezed, withdrawing arsenate solution. Then, the material 1 was kept between two foils of cellulose paper for 10 minutes to remove the excess of arsenate solution before adding the fresh one. The content of As(V) in the water residue collected after each squeezing cycle was measured by ICP-MS revealing the ~99% of arsenic removal up to six cycles.

To evaluate the complete regeneration of material 1, recycling tests by washing in acidic media the sample were carried out. To this purpose, the material 1 was kept in contact for 24h with 30 mg/L of arsenate solution. After that, the sponge was regenerated in a column with HCl 1M and washed with water to reach pH=6. The experiment was repeated up to three subsequent cycles. After each cycle both acid and residue arsenate solutions were analysed by ICP-MS revealing As desorption values higher than 60%, and thus an efficient reusability of the regenerated sponge for all tested cycles was found.

Example 14: sequestration of Boron

The efficiency of the material deriving from 100% styrene-N-methyl-D-glucamine monomer (material 1) for the sequestration of boron from water was evaluated towards four solution of H3BO4 with increasing concentration in B (III) ions. The adsorption tests were carried out using approximately 10 mg of material 1 in 5 mL of solution and measuring the residual concentration of boron, after 24 h of constant shaking, by ICP-MS. The results are shown in the following table 5.

Table 5

| B (III) | | |
|---|---|---|
| $C_0$ mg $L^{-1}$ | $C_e$ mg $L^{-1}$ | Retention % |
| 16.67 | 2.60 | 84.4 |
| 19.52 | 5.00 | 74.4 |
| 62.73 | 35.10 | 44.0 |
| 125.88 | 92.88 | 26.2 |

## Claims

1. Macroporous polymeric adsorbent material having a three-dimensional structure with interconnected pores of diameter comprised between 5 and 100 μm measured by using Scanning Electron Microscopy analysis, being in the form of a cryogel, wherein the cryogel is of formula (I):

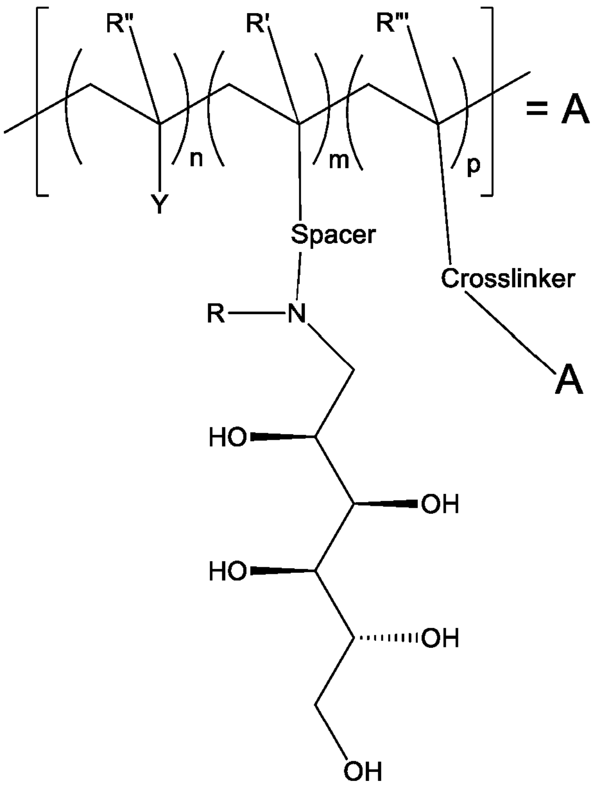

Wherein n is a percentage comprised between 0 and 99;
m is a percentage comprised between 1 and 100;
n + m is 100;
p is a value ranging from 0% to 40% of (n+m);
Y is selected from the group consisting of: COOH, $COOCH_2CH_2OH$, $COOCH_2CH_2NH_2$, $SO_3H$, $PhSO_3H$, PhCOOH;
R is selected from the group consisting of $CH_3$, $CH_2CH_3$, $CH_2CH_2CH_3$, $CH(CH_3)_2$;
R', R", R‴, the same or different are H or $CH_3$;
spacer is selected from the group consisting of

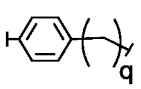 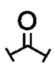 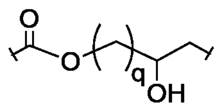 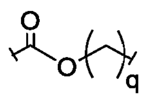 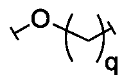 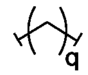

q is an integer comprised between 1 and 10;
A is the main polymeric chain which is repeated as indicated in the general formula (I);
the crosslinker is selected from the group consisting of: N,N'-Methylenebisacrylamide, N,N'-Methylenebismetaacrylamide, N,N'-hexamethylenebisacrylamide, N,N'-diallylbisacrylamide, diallyl fumarate, diallyl phthalate, ethyleneglycoldiacrylate, poly(ethyleneglycol)diacrylate, propyleneglycoldiacrylate, poly(propyleneglycol)diacrylate.

2. Macroporous polymeric adsorbent material according to claim 1 having a porosity comprised between 50% and 95%.

3. Macroporous polymeric adsorbent material according to claim 1 having a porosity comprised between 80% and 85% wherein the interconnected pores have a diameter comprised between 20 and 30 μm measured by using Scanning

Electron Microscopy analysis, and the cryogel of formula (I) is a crosslinked polystyrene-N-methyl-D-glucamine.

4. Macroporous polymeric adsorbent material according to claim 1 having a porosity comprised between 82% and 87% wherein the interconnected pores have a diameter comprised between 10 and 15 μm measured by using Scanning Electron Microscopy analysis and the cryogel of formula (I) is a crosslinked copolymer of polystyrene-N-methyl-D-glucamine and 2-hydroxyethylmethacrylate copolymer 1:1.

5. Process for the preparation of macroporous polymeric adsorbent material having a three-dimensional structure with interconnected pores of diameter comprised between 5 and 100 μm measured by using Scanning Electron Microscopy analysis being in the form of a cryogel, wherein the cryogel is of formula (I):

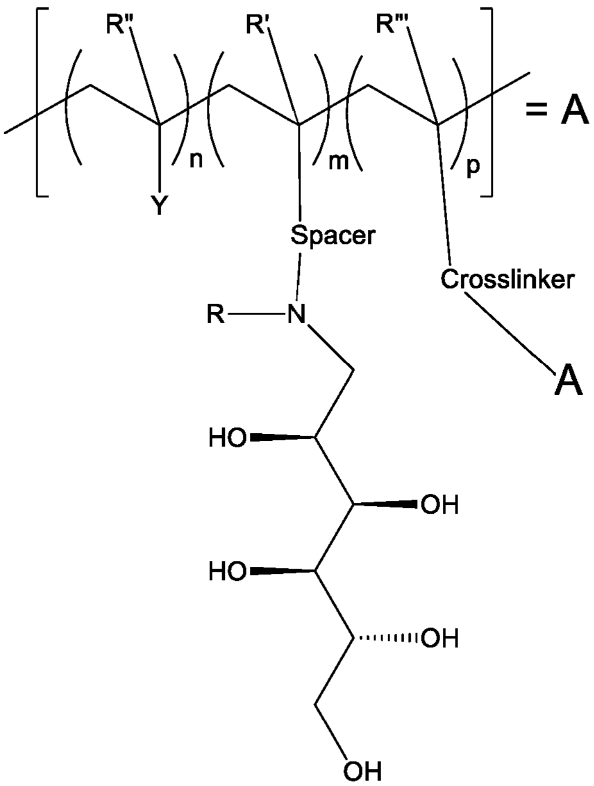

Wherein n is a percentage comprised between 0 and 99;
m is a percentage comprised between 1 and 100;
n + m is 100;
p is a value ranging from 0% to 40% of (n+m);
Y is selected from the group consisting of: COOH, $CONH_2$, $COOCH_2CH_2OH$, $COOCH_2CH_2NH_2$, $COOCH_2CH_2N(CH_3)_2$, $SO_3H$, $PhSO_3H$, PhCOOH;
R is selected from the group consisting of $CH_3$, $CH_2CH_3$, $CH_2CH_2CH_3$, $CH(CH_3)_2$;
R', R", R‴, the same or different are H or $CH_3$;
spacer is selected from the group consisting of

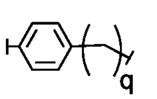 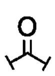 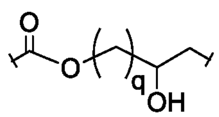 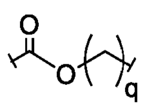 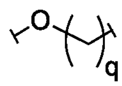 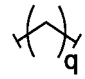

q is an integer comprised between 1 and 10;
A is the main polymeric chain which is repeated as indicated in the general formula (I)
the crosslinker is a compound with two polymerizable double bond selected from the group consisting of: Divinylsulphone, N,N'-Methylenebisacrylamide, N,N'-Methylenebismetaacrylamide, N,N'-hexamethylenebisacrylamide, N,N'-diallylbisacrylamide, diallyl fumarate, diallyl phthalate, ethyleneglycoldiacrylate, poly(ethyleneglycol)diacrylate, propyleneglycoldiacrylate, poly(propyleneglycol)diacrylate.

Comprising the following steps:

a) Mixing at least one polymerizable monomer containing N-alkyl-D-glucamine selected from the group consisting of:

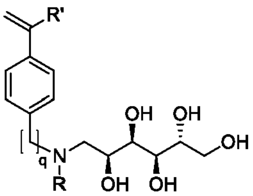
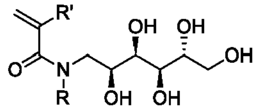
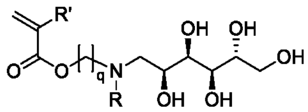
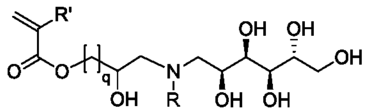
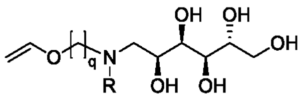
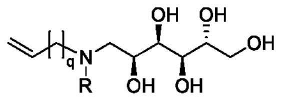

wherein R is selected from the group consisting of $CH_3$, $CH_2CH_3$, $CH_2CH_2CH_3$, $CH(CH_3)_2$;
R' is H, $CH_3$
q is an integer comprised between 1 and 10;
and optionally a polymerizable monomer not containing N-alkyl-D-glucamine selected from the group consisting of:

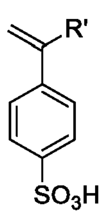
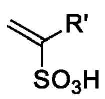
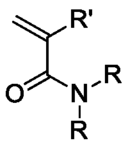
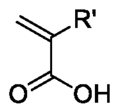
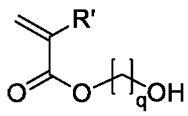
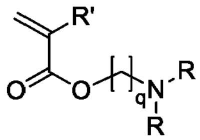

wherein R is selected from the group consisting of $CH_3$, $CH_2CH_3$, $CH_2CH_2CH_3$, $CH(CH_3)_2$;
R' is H, $CH_3$
q is an integer comprised between 1 and 10;

with a crosslinking agent **characterised in** having two polymerizable double bonds in the presence of a solvent or mixture of solvents, with a pH in the range between 6-8, being in the solid state at the temperatures used in the cryo-polymerization process, consisting of: water, dimethylsulphoxide, dioxane, N,N-dimethylacetamide, tert-buthanol, cyclohexane, and mixtures thereof;

b) Adding at a temperature comprised between 0 and 5°C, under stirring, to the solution as obtained in step a) an initiator of radical polymerization selected from the group consisting of organic and inorganic peroxides, peracids, azo-compounds, redox or UV initiators and a catalyst for the production of radicals.
c) Cooling of the solution as obtained in b) at a temperature comprised between -10 and -25 °C for a time comprised between 12 and 48 hours until the cryogel is obtained;
d) Thawing, washing and drying the cryogel as obtained in step c).

6. Process according to claim 5 wherein in step a) the concentration of all polymerizable species is comprised between 10% and 50% in weight in respect to the volume of used solvent.

7. Process according to claim 5 wherein in step b) the initiator of radical polymerization is used with a concentration between 0.5% and 10% by weight, based on the sum of monomers by weight.

**8.** Process according to claim 5 wherein in step b) the catalyst for the production of radicals is tetramethylethylenediamine.

**9.** Process according to claim 5 wherein in step d) the washing step is carried out by washing sequentially with water, followed by diluted HCl and finally with mixtures of $H_2O$/HCl/EtOH wherein the concentration of EtOH progressively increase up to pure EtOH.

**10.** Process according to claim 5 wherein in step d) the drying step is carried out under nitrogen flow and then under vacuum.

**11.** Use of the macroporous polymeric adsorbent material having a three-dimensional structure with interconnected pores of diameter comprised between 5 and 100 μm measured by using Scanning Electron Microscopy analysis, being in the form of a cryogel, wherein the cryogel is of formula (I) of anyone of claims 1-4 for sequestering and/or removing toxic contaminants and for the manufacture of devices for sequestering and/or removing toxic contaminants wherein toxic contaminants are toxic metalloids toxic heavy metals selected from the group consisting of arsenic, boron, antimony and/or toxic heavy metals selected from the group consisting of cadmium, mercury, lead, manganese, chromium, cobalt, nickel, copper, zinc, silver, thallium.

**12.** Use according to claim 11 wherein toxic contaminants are sequestered and/or removed from contaminated water and/or soil.

**13.** Filters or sponges comprising the macroporous polymeric adsorbent material having a three-dimensional structure with interconnected pores of diameter comprised between 5 and 100 μm measured by using Scanning Electron Microscopy analysis being in the form of a cryogel, wherein the cryogel is of formula (I) of anyone of claims 1-4.

**Patentansprüche**

**1.** Makroporöses polymeres adsorptionsfähiges Material, das eine dreidimensionale Struktur mit miteinander verbundenen Poren eines Durchmessers aufweist, der zwischen 5 und 100 μm, durch Anwenden von Rasterelektronenmikroskopieanalyse gemessen, liegt, und das in Form eines Cryogels vorliegt, wobei das Cryogel die Formel (I) aufweist:

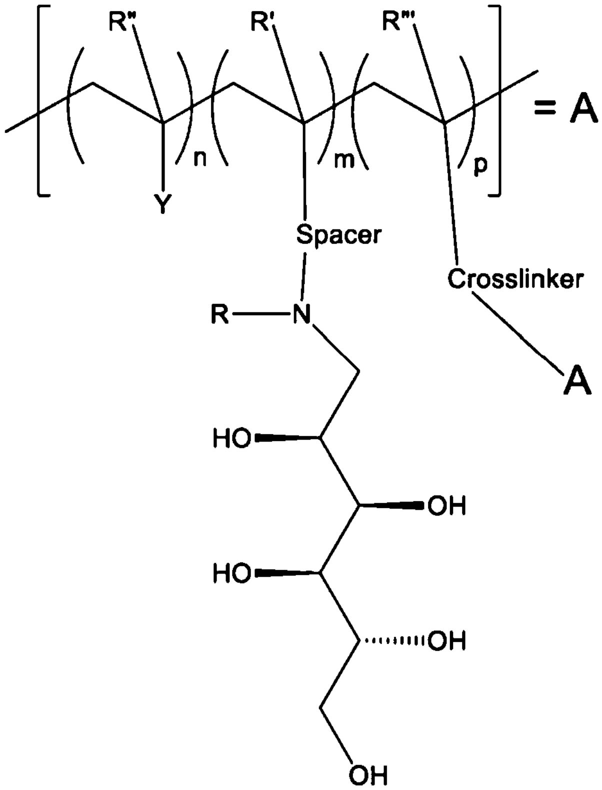

Spacer Abstandhalter
Crosslinker Vernetzer
wobei n ein Prozentsatz ist, der zwischen 0 und 99 liegt;
m ein Prozentsatz ist, der zwischen 1 und 100 liegt;
n + m 100 beträgt;
p ein Wert im Bereich von 0 % bis 40 % von (n+m) ist;
Y aus der Gruppe ausgewählt ist bestehend aus: COOH, $COOCH_2CH_2OH$, $COOCH_2CH_2NH_2$, $SO_3H$, $PhSO_3H$, PhCOOH;
R aus der Gruppe ausgewählt ist bestehend aus $CH_3$, $CH_2CH_3$, $CH_2CH_2CH_3$, $CH(CH_3)_2$;
R', R", R‴, die gleich oder verschieden sind, H oder $CH_3$ sind;
der Abstandhalter aus der Gruppe ausgewählt ist bestehend aus

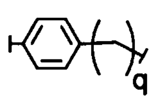 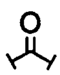 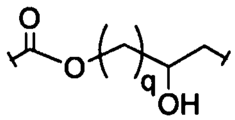 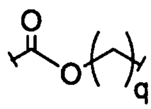 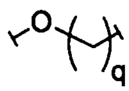 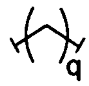

q eine ganze Zahl ist, die zwischen 1 und 10 liegt;
A die polymere Hauptkette ist, die wie in der allgemeinen Formel (I) angezeigt wiederholt wird;
der Vernetzer aus der Gruppe ausgewählt ist bestehend aus: N,N'-Methylenbisacrylamid, N,N'-Methylenbismetaacrylamid, N,N'-Hexamethylenbisacrylamid, N,N'-Diallylbisacrylamid, Diallylfumarat, Diallylphthalat, Ethylenglykoldiacrylat, Poly(ethylenglykol)diacrylat, Propylenglykoldiacrylat, Poly(propylenglykol)diacrylat.

**2.** Makroporöses polymeres adsorptionsfähiges Material nach Anspruch 1, das eine Porosität aufweist, die zwischen 50 % und 95 % liegt.

**3.** Makroporöses polymeres adsorptionsfähiges Material nach Anspruch 1, das eine Porosität aufweist, die zwischen 80 % und 85 % liegt, wobei die miteinander verbundenen Poren einen Durchmesser aufweisen, der zwischen 20 und 30 µm, durch Anwenden von Rasterelektronenmikroskopieanalyse gemessen, liegt, und das Cryogel der Formel (I) ein vernetztes Polystyrol-N-methyl-D-glucamin ist.

**4.** Makroporöses polymeres adsorptionsfähiges Material nach Anspruch 1, das eine Porosität aufweist, die zwischen 82

% und 87 % liegt, wobei die miteinander verbundenen Poren einen Durchmesser aufweisen, der zwischen 10 und 15 μm, durch Anwenden von Rasterelektronenmikroskopieanalyse gemessen, liegt, und das Cryogel der Formel (I) ein vernetztes Copolymer von Polystyrol-N-methyl-D-glucamin und 2-Hydroxyethylmethacrylat-Copolymer 1:1 ist.

**5.** Verfahren für die Herstellung von makroporösem polymerem adsorptionsfähigem Material, das eine dreidimensionale Struktur mit miteinander verbundenen Poren eines Durchmessers aufweist, der zwischen 5 und 100 μm, durch Anwenden von Rasterelektronenmikroskopieanalyse gemessen, liegt, und das in Form eines Cryogels vorliegt, wobei das Cryogel die Formel (I) aufweist:

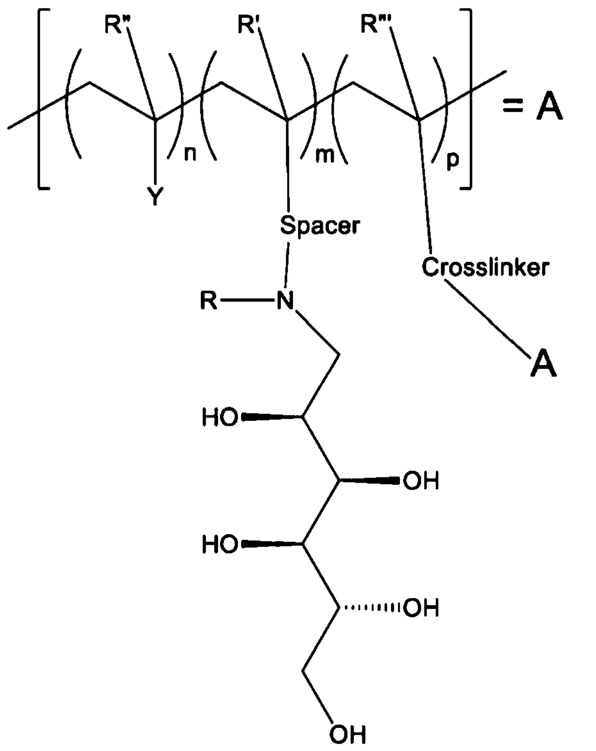

Spacer Abstandhalter
Crosslinker Vernetzer
wobei n ein Prozentsatz ist, der zwischen 0 und 99 liegt;
m ein Prozentsatz ist, der zwischen 1 und 100 liegt;
n + m 100 beträgt;
p ein Wert im Bereich von 0 % bis 40 % von (n+m) ist;
Y aus der Gruppe ausgewählt ist bestehend aus: COOH, $CONH_2$, $COOCH_2CH_2OH$, $COOCH_2CH_2NH_2$, $COOCH_2CH_2N(CH_3)_2$, $SO_3H$, $PhSO_3H$, PhCOOH;
R aus der Gruppe ausgewählt ist bestehend aus $CH_3$, $CH_2CH_3$, $CH_2CH_2CH_3$, $CH(CH_3)_2$;
R', R", R‴, die gleich oder verschieden sind, H oder $CH_3$ sind;
der Abstandhalter aus der Gruppe ausgewählt ist bestehend aus

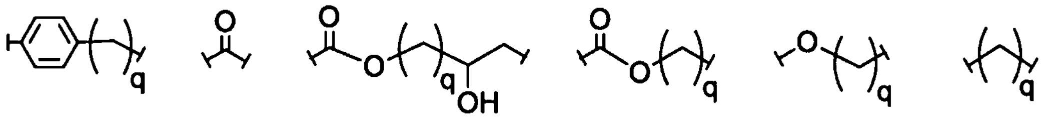

q eine ganze Zahl ist, die zwischen 1 und 10 liegt;
A die polymere Hauptkette ist, die wie in der allgemeinen Formel (I) angezeigt wiederholt wird;
der Vernetzer eine Verbindung mit zwei polymerisierbaren Doppelbindungen ist, die aus der Gruppe ausgewählt sind bestehend aus: Divinylsulfon, N,N'-Methylenbisacrylamid, N,N'-Methylenbismetaacrylamid, N,N'-Hexamethylenbisacrylamid, N,N'-Diallylbisacrylamid, Diallylfumarat, Diallylphthalat, Ethylenglykoldiacrylat, Poly(ethylenglykol)diacrylat, Propylenglykoldiacrylat, Poly(propylenglykol)diacrylat,
das die folgenden Schritte umfasst:

a) Mischen mindestes eines polymerisierbaren Monomers, das N-Alkyl-D-glucamin enthält, das aus der Gruppe ausgewählt ist bestehend aus:

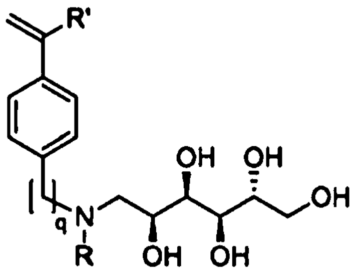
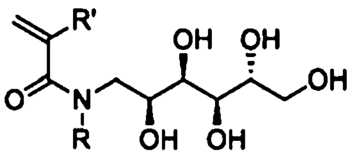
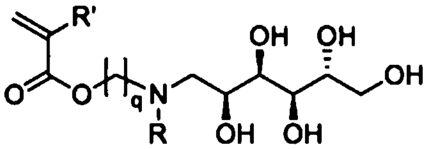
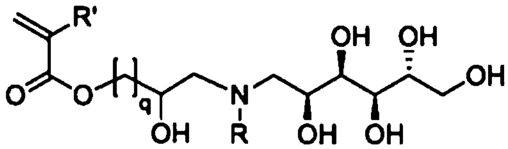
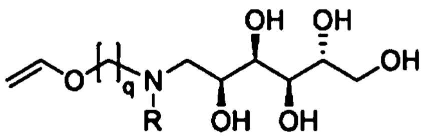
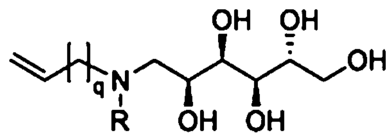

wobei R aus der Gruppe ausgewählt ist bestehend aus $CH_3$, $CH_2CH_3$, $CH_2CH_2CH_3$, $CH(CH_3)_2$;
R' H, $CH_3$ ist
q eine ganze Zahl ist, die zwischen 1 und 10 liegt;
und wahlweise ein polymerisierbares Monomer, das kein N-Alkyl-D-glutamin enthält, ausgewählt aus der Gruppe bestehend aus:

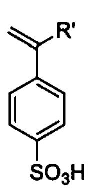
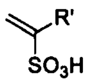
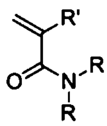
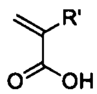
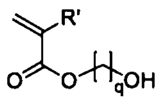
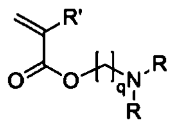

wobei R aus der Gruppe ausgewählt ist bestehend aus $CH_3$, $CH_2CH_3$, $CH_2CH_2CH_3$, $CH(CH_3)_2$;
R' H, $CH_3$ ist
q eine ganze Zahl ist, die zwischen 1 und 10 liegt;
mit einem Vernetzungsmittel, das **gekennzeichnet ist durch** Aufweisen von zwei polymerisierbaren Doppelbindungen in Gegenwart eines Lösungsmittels oder einer Mischung von Lösungsmitteln, mit einem pH-Wert im Bereich zwischen 6-8, die sich im festen Zustand bei den Temperaturen befinden, die im Cryopolymerisationsvorgang verwendet werden, bestehend aus: Wasser, Dimethylsulfoxid, Dioxan, N,N-Dimethylacetamid, tert-Butanol, Cyclohexan und Mischungen davon;

b) Zusetzen, bei einer Temperatur, die zwischen 0 und 5 °C liegt, unter Rühren, zu der Lösung, wie sie in Schritt a) erhalten worden ist, eines Initiators von Radikalpolymerisation ausgewählt aus der Gruppe bestehend aus organischen und anorganischen Peroxiden, Persäuren, AzoVerbindungen, Redox- oder UV- Initiatoren und einem Katalysator für die Herstellung von Radikalen;
c) Kühlen der Lösung, wie sie in b) erhalten worden ist, bei einer Temperatur, die zwischen -10 und - 25 °C liegt, für eine Zeit, die zwischen 12 und 48 Stunden liegt, bis das Cryogel erhalten wird;
d) Auftauen, Waschen und Trocknen des wie in Schritt c) erhaltenen Cryogels.

**6.** Verfahren nach Anspruch 5, wobei in Schritt a) die Konzentration aller polymerisierbaren Spezies zwischen 10 und 50 Gew.-% mit Bezug auf das Volumen von verwendetem Lösungsmittel liegt.

**7.** Verfahren nach Anspruch 5, wobei in Schritt b) der Initiator von Radikalpolymerisation mit einer Konzentration zwischen 0,5 und 10 Gew.-%, auf die Summer von Monomeren bezogen, auf das Gewicht bezogen, verwendet wird.

**8.** Verfahren nach Anspruch 5, wobei in Schritt b) der Katalysator für die Herstellung von Radikalen Tetramethylethylendiamin ist.

**9.** Verfahren nach Anspruch 5, wobei in Schritt d) der Waschschritt durch sequenzielles Waschen mit Wasser, gefolgt von verdünntem HCl und schließlich mit Mischungen von $H_2O$/HCl/EtOH ausgeführt wird, wobei die Konzentration von EtOH sich fortschreitend bis zu reinem EtOH erhöht.

**10.** Verfahren nach Anspruch 5, wobei in Schritt d) der Trocknungsschritt unter Stickstoffströmung und dann unter Vakuum ausgeführt wird.

**11.** Verwendung des makroporösen polymeren adsorptionsfähigen Materials, das eine dreidimensionale Struktur mit miteinander verbundenen Poren eines Durchmessers aufweist, der zwischen 5 und 100 μm, durch Anwenden von Rasterelektronenmikroskopieanalyse gemessen, liegt, das in Form eines Cryogels vorliegt, wobei das Cryogel die Formel (I) nach einem der Ansprüche 1-4 aufweist, zum Sequestrieren und/oder Entfernen toxischer Verunreinigungen und für die Herstellung von Vorrichtungen zum Sequestrieren und/oder Entfernen toxischer Verunreinigungen, wobei toxische Verunreinigungen toxische Metalloide, toxische Schwermetalle sind ausgewählt aus der Gruppe bestehend aus Arsen, Bor, Antimon und/oder toxischen Schwermetallen ausgewählt aus der Gruppe bestehend aus Kadmium, Quecksilber, Blei, Mangan, Chrom, Kobalt, Nickel, Kupfer, Zink, Silber, Thallium.

**12.** Verwendung nach Anspruch 11, wobei toxische Verunreinigungen aus verunreinigtem Wasser und/oder Boden sequestriert und/oder entfernt werden.

**13.** Filter oder Schwämme, die das makroporöse polymere adsorptionsfähige Material umfassen, das eine dreidimensionale Struktur mit miteinander verbundenen Poren eines Durchmessers aufweist, der zwischen 5 und 100 μm, durch Anwenden von Rasterelektronenmikroskopieanalyse gemessen, liegt, das in Form eines Cryogels vorliegt, wobei das Cryogel die Formel (I) nach einem der Ansprüche 1-4 aufweist.

## Revendications

**1.** Matériau adsorbant polymère macroporeux ayant une structure tridimensionnelle avec des pores interconnectés de diamètre compris entre 5 et 100 μm mesuré à l'aide d'une analyse par microscopie électronique à balayage, qui est sous forme de cryogel, dans lequel le cryogel est de formule (I) :

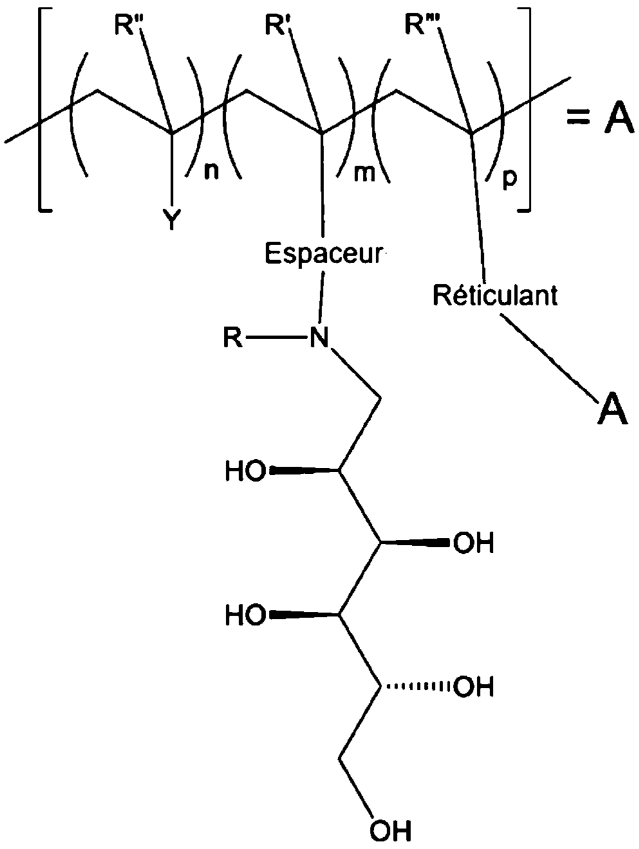

dans lequel n représente un pourcentage compris entre 0 et 99 ;
m représente un pourcentage compris entre 1 et 100 ;
n + m vaut 100 ;
p représente une valeur comprise dans la plage allant de 0 % à 40 % de (n+m) ;
Y est choisi dans le groupe constitué par : COOH, $COOCH_2CH_2OH$, $COOCH_2CH_2NH_2$, $SO_3H$, $PhSO_3H$, PhCOOH ;
R est choisi dans le groupe constitué par $CH_3$, $CH_2CH_3$, $CH_2CH_2CH_3$, $CH(CH_3)_2$ ;
R’, R", R‴, identiques ou différents, représentent H ou $CH_3$ ;
l’espaceur est choisi dans le groupe constitué par

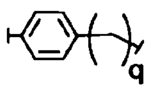 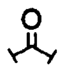 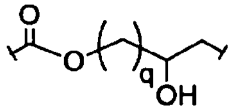 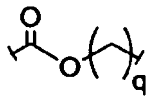 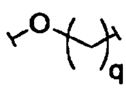 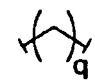

q représente un entier compris entre 1 et 10 ;
A représente la chaîne polymère principale qui est répétée comme indiqué dans la formule générale (I) ;
le réticulant est choisi dans le groupe constitué par : le N,N’-méthylènebisacrylamide, le N,N’-méthylènebisméthacrylamide, le N,N’-hexaméthylènebisacrylamide, le N,N’-diallylbisacrylamide, le fumarate de diallyle, le phtalate de diallyle, le diacrylate d’éthylène glycol, le diacrylate de poly(éthylène glycol), le diacrylate de propylène glycol, le diacrylate de poly(propylène glycol).

**2.** Matériau adsorbant polymère macroporeux selon la revendication 1 ayant une porosité comprise entre 50 % et 95 %.

**3.** Matériau adsorbant polymère macroporeux selon la revendication 1 ayant une porosité est comprise entre 80 % et 85 % dans lequel les pores interconnectés ont un diamètre compris entre 20 et 30 μm mesuré à l’aide d’une analyse par microscopie électronique à balayage, et le cryogel de formule (I) est une polystyrène-N-méthyl-D-glucamine réticulée.

**4.** Matériau adsorbant polymère macroporeux selon la revendication 1 ayant une porosité comprise entre 82 % et 87 %

dans lequel les pores interconnectés ont un diamètre compris entre 10 et 15 μm mesuré à l'aide d'une analyse par microscopie électronique à balayage et le cryogel de formule (I) est un copolymère réticulé de polystyrène-N-méthyl-D-glucamine et de méthacrylate de 2-hydroxyéthyle 1:1.

**5.** Procédé de préparation d'un matériau adsorbant polymère macroporeux ayant une structure tridimensionnelle avec des pores interconnectés de diamètre compris entre 5 et 100 μm mesuré à l'aide d'une analyse par microscopie électronique à balayage qui est sous forme de cryogel, dans lequel le cryogel est de formule (I) :

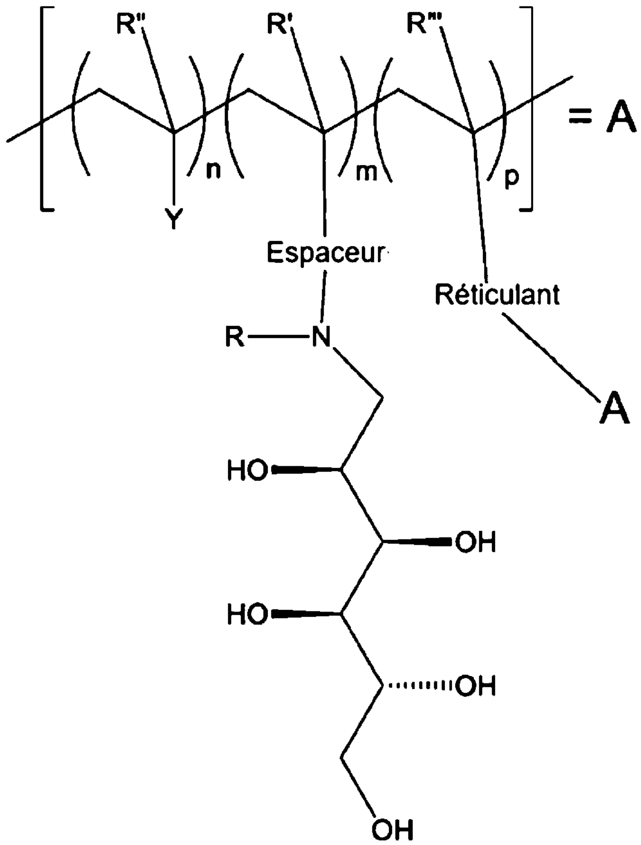

dans lequel n représente un pourcentage compris entre 0 et 99 ;
m représente un pourcentage compris entre 1 et 100 ;
n + m vaut 100 ;
p représente une valeur comprise dans la plage allant de 0 % à 40 % de (n+m) ;
Y est choisi dans le groupe constitué par : COOH, $COONH_2$, $COOCH_2CH_2OH$, $COOCH_2CH_2NH_2$, $COOCH_2CH_2N(CH_3)_2$, $SO_3H$, $PhSO_3H$, PhCOOH ;
R est choisi dans le groupe constitué par $CH_3$, $CH_2CH_3$, $CH_2CH_2CH_3$, $CH(CH_3)_2$ ;
R', R", R‴, identiques ou différents, représentent H ou $CH_3$ ;
l'espaceur est choisi dans le groupe constitué par

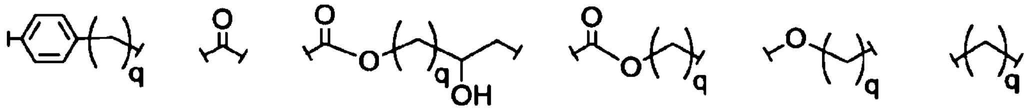

q représente un entier compris entre 1 et 10 ;
A représente la chaîne polymère principale qui est répétée comme indiqué dans la formule générale (I) ;
le réticulant est un composé avec deux doubles liaisons polymérisable choisi dans le groupe constitué par : la divinylsulfone, le N,N'-méthylènebisacrylamide, le N,N'-méthylènebismétaacrylamide, le N,N'-hexaméthylènebisacrylamide, le N,N'-diallylbisacrylamide, le fumarate de diallyle, le phtalate de diallyle, le diacrylate d'éthylène glycol, le diacrylate de poly(éthylène glycol), le diacrylate de propylène glycol, le diacrylate de poly(propylène glycol)

comprenant les étapes suivantes :

a) mélange d'au moins un monomère polymérisable contenant une N-alkyl-D-glucamine choisie dans le groupe constitué par :

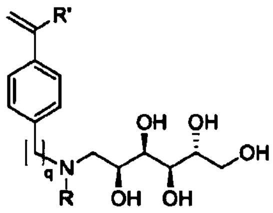
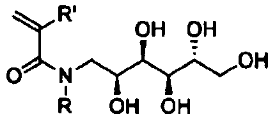
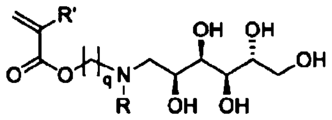
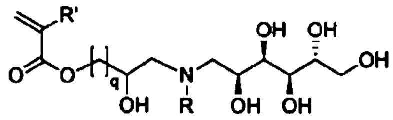
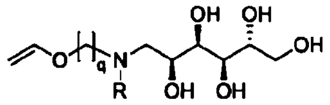
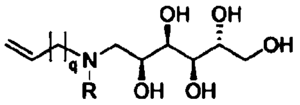

dans lequel R est choisi dans le groupe constitué par $CH_3$, $CH_2CH_3$, $CH_2CH_2CH_3$, $CH(CH_3)_2$ ;
R' représente H, $CH_3$ ;
q représente un entier compris entre 1 et 10 ;
et éventuellement un monomère polymérisable ne contenant pas de N-alkyl-D-glucamine choisi dans le groupe constitué par :

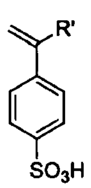
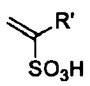
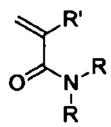
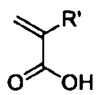
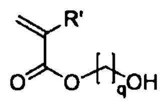
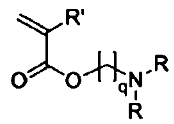

dans lequel R est choisi dans le groupe constitué par $CH_3$, $CH_2CH_3$, $CH_2CH_2CH_3$, $CH(CH_3)_2$ ;
R' représente H, $CH_3$ ;
q représente un entier compris entre 1 et 10 ;
avec un agent de réticulation caractérisé comme ayant deux doubles liaisons polymérisables en présence d'un solvant ou d'un mélange de solvants, avec un pH dans la plage entre 6 et 8, étant à l'état solide aux températures utilisées lors du procédé de cryopolymérisation, constitué par : l'eau, le diméthylsulfoxyde, le dioxane, le N,N-diméthylacétamide, le tert-butanol, le cyclohexane, et des mélanges de ceux-ci ;

b) ajout, à une température comprise entre 0 et 5 °C, sous agitation, à la solution obtenue à l'étape a), d'un initiateur de polymérisation radicalaire choisi dans le groupe constitué par les peroxydes organiques et inorganiques, les peracides, les composés azoïques, les initiateurs redox ou UV et d'un catalyseur pour la production de radicaux ;
c) refroidissement de la solution telle qu'obtenue en b) à une température comprise entre -10 et -25 °C pendant une durée comprise entre 12 et 48 heures jusqu'à obtention du cryogel ;
d) décongélation, lavage et séchage du cryogel tel qu'obtenu à l'étape c).

6. Procédé selon la revendication 5 dans lequel, à l'étape a), la concentration de toutes les espèces polymérisables est comprise entre 10 % et 50 % en poids par rapport au volume de solvant utilisé.

7. Procédé selon la revendication 5 dans lequel, à l'étape b), l'initiateur de polymérisation radicalaire est utilisé à une concentration comprise entre 0,5 % et 10 % en poids, par rapport à la somme des monomères en poids.

**8.** Procédé selon la revendication 5 dans lequel, à l'étape b), le catalyseur de production de radicaux est la tétraméthyléthylènediamine.

**9.** Procédé selon la revendication 5 dans lequel, à l'étape d), l'étape de lavage est effectuée par lavages successifs avec de l'eau, suivi d'HCl dilué et finalement avec des mélanges $H_2O$/HCl/EtOH, dans lequel la concentration d'EtOH augmente progressivement jusqu'à de l'EtOH pur.

**10.** Procédé selon la revendication 5 dans lequel, à l'étape d), l'étape de séchage est effectuée sous flux d'azote, puis sous vide.

**11.** Utilisation du matériau adsorbant polymère macroporeux ayant une structure tridimensionnelle avec des pores interconnectés de diamètre compris entre 5 et 100 μm mesuré à l'aide d'une analyse par microscopie électronique à balayage, qui est sous forme de cryogel, dans laquelle le cryogel est de formule (I) selon l'une quelconque des revendications 1 à 4 pour la séquestration et/ou l'élimination de contaminants toxiques et pour la fabrication de dispositifs pour la séquestration et/ou l'élimination de contaminants toxiques, dans laquelle les contaminants toxiques sont des métalloïdes toxiques, des métaux lourds toxiques choisis dans le groupe constitué par l'arsenic, le bore, l'antimoine et/ou des métaux lourds toxiques choisis dans le groupe constitué par le cadmium, le mercure, le plomb, le manganèse, le chrome, le cobalt, le nickel, le cuivre, le zinc, l'argent, le thallium.

**12.** Utilisation selon la revendication 11 dans laquelle les contaminants toxiques sont séquestrés et/ou éliminés de l'eau et/ou du sol contaminés.

**13.** Filtres ou éponges comprenant le matériau adsorbant polymère macroporeux ayant une structure tridimensionnelle avec des pores interconnectés de diamètre compris entre 5 et 100 μm mesuré à l'aide d'une analyse par microscopie électronique à balayage, qui est sous forme de cryogel, dans lesquels le cryogel est de formule (I) selon l'une quelconque des revendications 1 à 4.

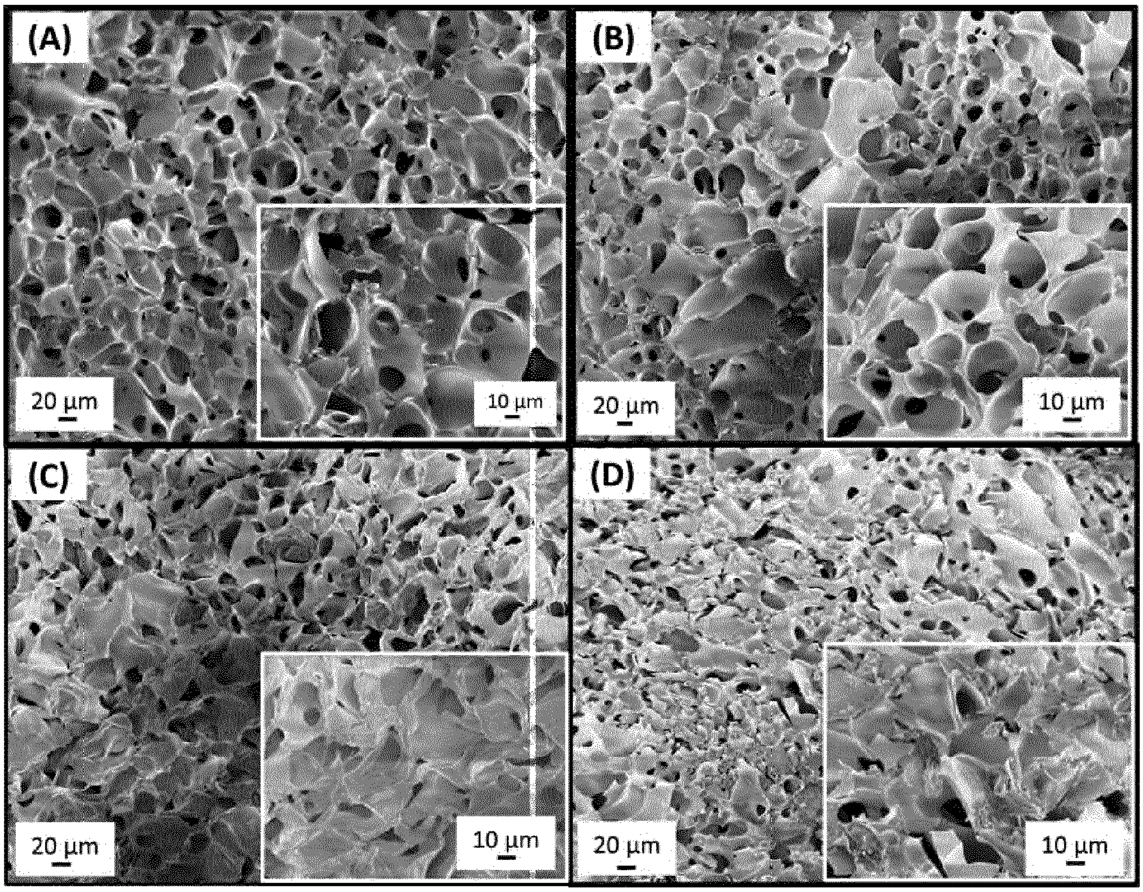


Figure 1

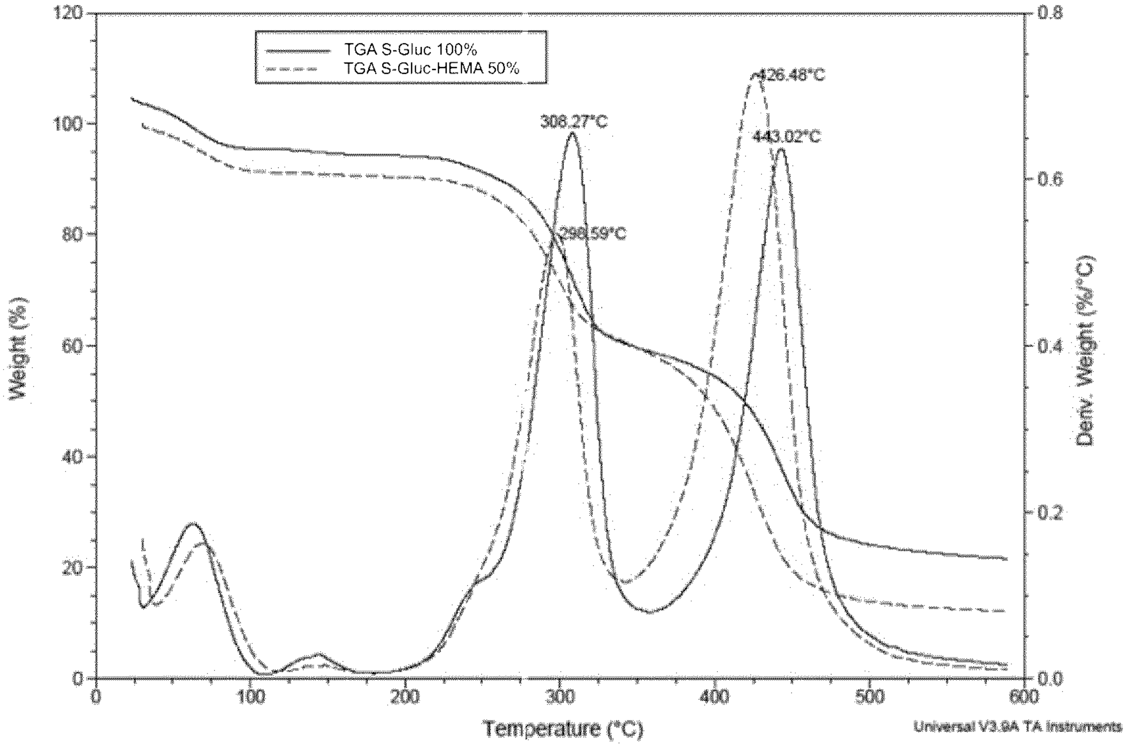
TGA S-Gluc 100%
TGA S-Gluc-HEMA 50%
308.27°C
298.59°C
426.48°C
443.02°C
Weight (%)
Deriv. Weight (%/°C)
Temperature (°C)
120
100
80
60
40
20
0
0.8
0.6
0.4
0.2
0.0
0
100
200
300
400
500
600
Universal V3.9A TA Instruments

Figure 2

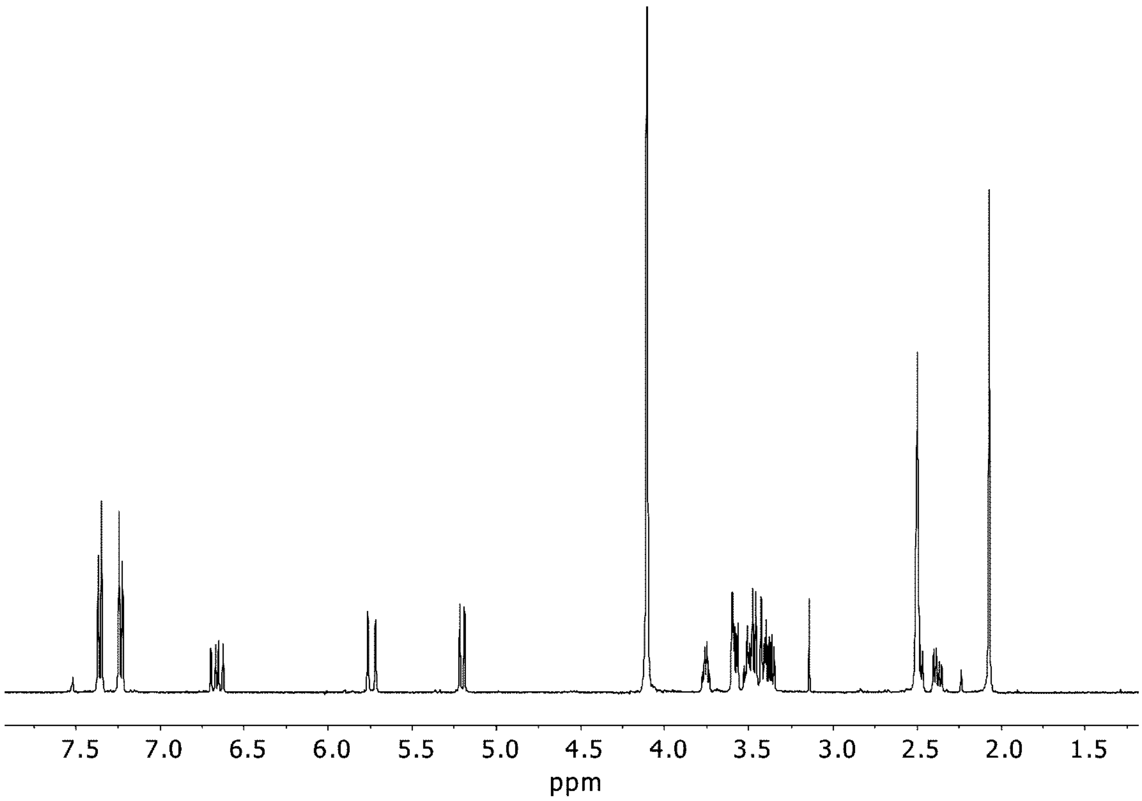


Figure 3

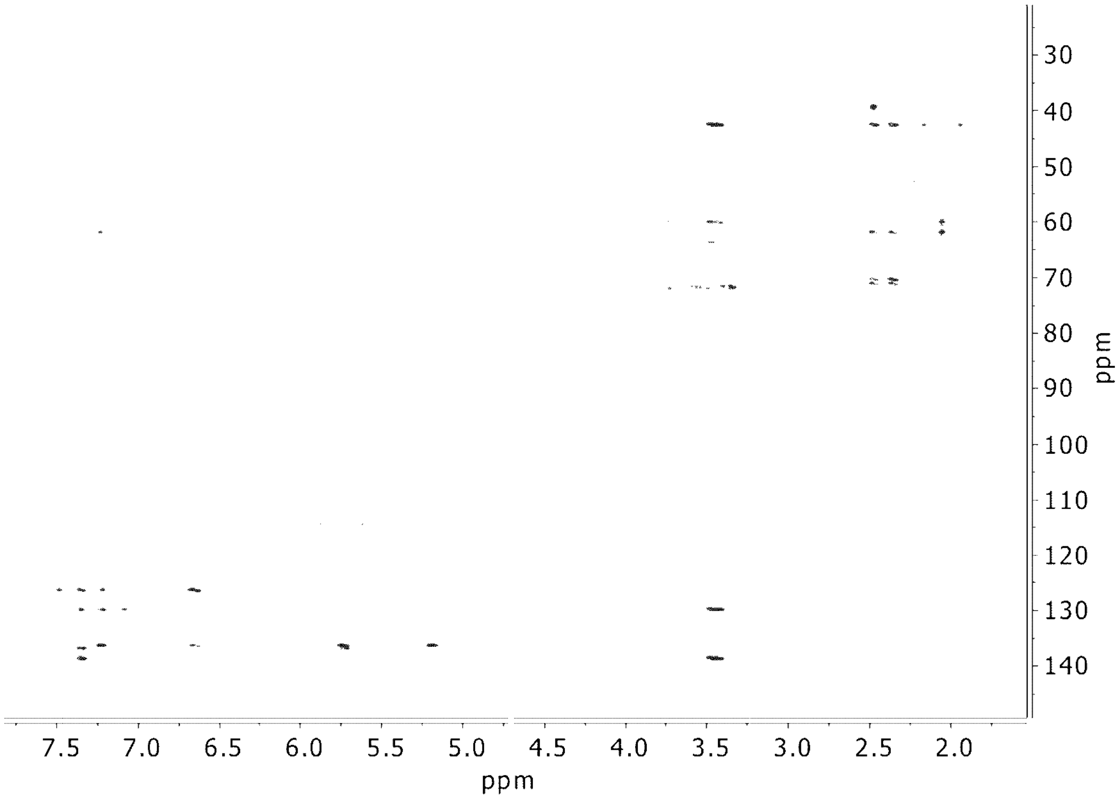
30
40
50
60
70
80
90
100
110
120
130
140
ppm
7.5
7.0
6.5
6.0
5.5
5.0
4.5
4.0
3.5
3.0
2.5
2.0
ppm

Figure 4

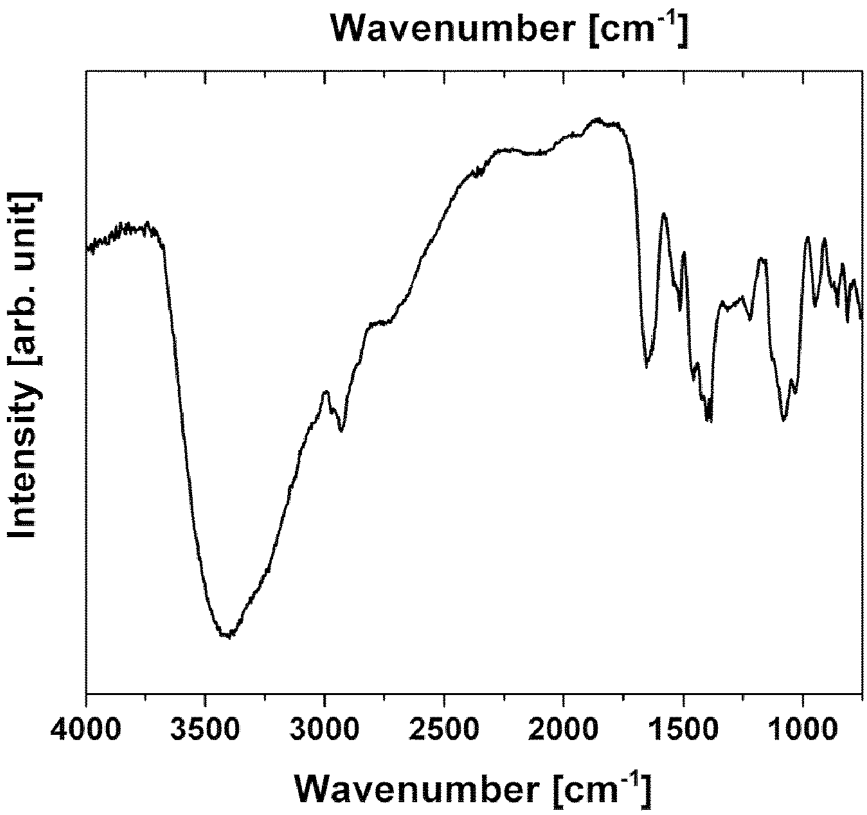
Wavenumber [cm-1]
Intensity [arb. unit]
4000
3500
3000
2500
2000
1500
1000
Wavenumber [cm-1]

Figure 5

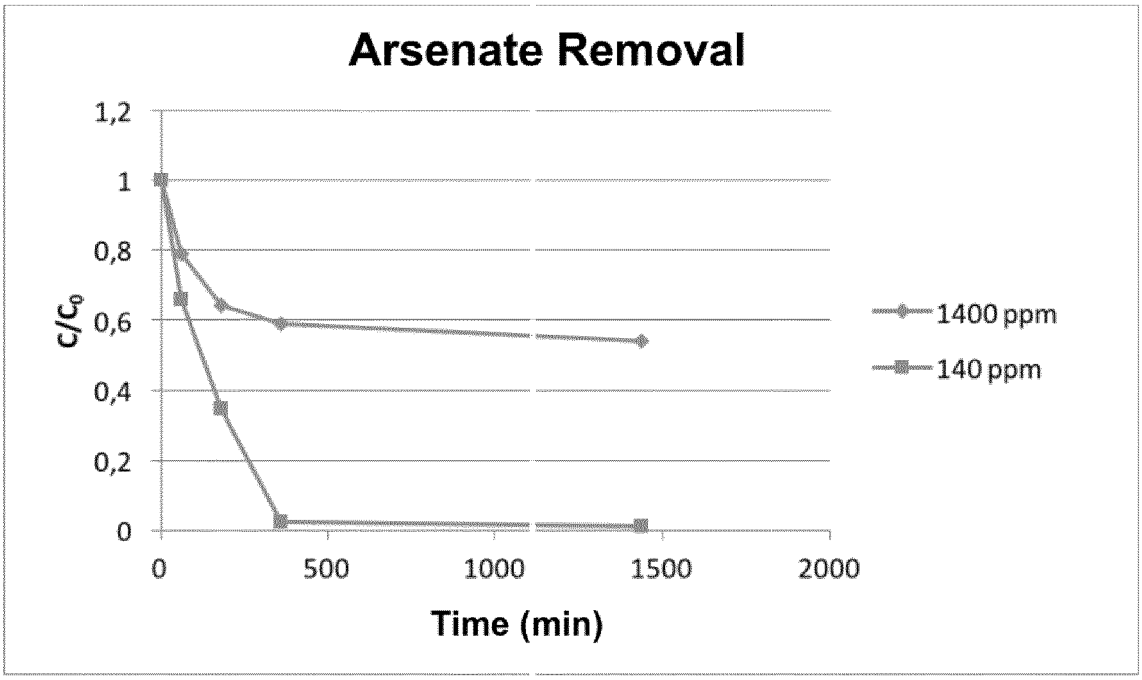
Arsenate Removal
1,2
1
0,8
0,6
0,4
0,2
0
c/c0
0
500
1000
1500
2000
Time (min)
1400 ppm
140 ppm

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102266749
- US 20130186836 A
- CN 105080519
- JP S58146448 B
- JP 2006167638 B
- WO 2018180430 A
- WO 2006110574 A
- US 20080169240 A
- WO 2017137919 A
- US 20190030494 A
- US 3567369 A
- US 20110117596 A
- WO 03031014 A
- WO 03041830 A

### Non-patent literature cited in the description


- **M. ARGOS** ; **T. KALRA** ; **P.J. RATHOUZ** ; **Y.CHEN** ; **B. PIERCE** ; **F. PARVEZ** ; **T. ISLAM** ; **A. AHMED** ; **M. RAKIBUZ-ZAMAN** ; **R. HASAN**. Arsenic exposure from drinking water, and all-cause and chronic-disease mortalities in Bangladesh (HEALS): a prospective cohort study. *Lancet*, 2010, vol. 376, 252-258
- **D. MOHANA** ; **C. U. PITTMAN JR.** Arsenic removal from water/wastewater using adsorbents-A critical review. *J. Hazard. Mater.*, 2007, vol. 142, 1-2, 1-53
- **R. SINGH** ; **S. SINGH** ; **P. PARIHAR** ; **V. P. SINGH** ; **S. M. PRASAD**. Arsenic contamination, consequences and remediation techniques: A review. *Ecotoxicology and Environmental Safety*, 2015, vol. 112, 247-270
- **L. DAMBIES** ; **R. SALINARO** ; **S. D. ALEXANDRATOS**. Immobilized N-Methyl-D-glucamine as an Arsenate-Selective Resin. *Environ. Sci. Technol.*, 2004, vol. 38, 6139-6146
- **LEANDRO TOLEDO** ; **BERNABÉ L. RIVAS** ; **BRUNO F. URBANO** ; **JULIO SÁNCHEZ**. Novel N-methyl-D-glucamine-based water-soluble polymer and its potential application in the removal of arsenic. *Separation and Purification Technology*, 2013, vol. V., 1-7
- **N. R. SHINDE** ; **V. CHAVAN** ; **R. ACHARYA** ; **N.S. RAJURKAR** ; **A.K. PANDEY**. Selective removal of arsenic(V) from natural water using N-methyl-D-glucamine functionalized poly(propylene) membranes. *J. Env. Chem. Eng.*, 2014, vol. 2, 2221-2228
- **B F. URBANO** ; **B. L. RIVAS** ; **F. MARTINEZ** ; **S. D. ALEXANDRATOS**. Water-insoluble polymer-clay nanocomposite ion exchange resin based on N-methyl-D-glucamine ligand groups for arsenic removal. *React. Functi. Polym.*, 2012, vol. 72, 642-649
- **M. R. GANDHI** ; **N. VISWANATHAN** ; **S. MEENAKSHIA**. Adsorption mechanism of hexavalent chromium removal using Amberlite IRA 743 resin. *Ion Exch. Lett*, 2010, vol. 3, 25-35
- **R. LA SPINA et al.** Chemically modified poly(2-hydroxyethyl methacrylate) cryogel for the adsorption of heparin. *Journal of Biomedical Materials Research, Part B: Applied Biomaterials*, 2014, vol. 102 (6), 1207-1216